(19) Europäisches Patentamt

European Patent Office

Office européen des brevets

(11) **EP 2 273 700 B1**

(12) **EUROPEAN PATENT SPECIFICATION**

(45) Date of publication and mention
of the grant of the patent:
**21.08.2013 Bulletin 2013/34**

(51) Int Cl.:
***H04B 10/532*** *(2013.01)*     ***H04B 10/61*** *(2013.01)*

(21) Application number: **09290491.1**

(22) Date of filing: **25.06.2009**

(54) **Dual-polarization optical bursts for reception by a coherent burst mode receiver with fast adaption**

Optische Doppelpolarisation-Bursts zum Empfangen eines kohärenten Burstmodus-Empfängers mit schneller Adaption

Rafales optiques à double polarisation pour la réception d'un récepteur en mode rafale doté d'une adaptation rapide

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**12.01.2011 Bulletin 2011/02**

(73) Proprietor: **Alcatel Lucent**
**75007 Paris (FR)**

(72) Inventors:
• **Charlet, Gabriel**
**91190 Villers Le Bacle (FR)**
• **Salsi, Massimiliano**
**75013 Paris (FR)**

(74) Representative: **Wetzel, Emmanuelle**
**Alcatel Lucent**
**Intellectual Property & Standards**
**70430 Stuttgart (DE)**

(56) References cited:
**EP-A1- 2 071 754**     **US-A1- 2007 147 850**
**US-A1- 2009 142 077**

• BEN YOO S J: "Optical Packet and Burst Switching Technologies for the Future Photonic Internet" JOURNAL OF LIGHTWAVE TECHNOLOGY, IEEE SERVICE CENTER, NEW YORK, NY, US, vol. 24, no. 12, 1 December 2006 (2006-12-01), pages 4468-4492, XP011156037 ISSN: 0733-8724
• NELSON L E ET AL: "Tolerance of 46-Gb/s dual-polarization quadrature-phase shift keyed signals to multiple-path interference" OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467962 ISBN: 978-1-4244-2606-5
• WADA N ET AL: "Prototype 160-Gbit/s/port Optical Packet Switch Based on Optical Code Label Processing and Related Technologies" IEEE JOURNAL OF SELECTED TOPICS IN QUANTUM ELECTRONICS, IEEE SERVICE CENTER, PISCATAWAY, NJ, US, vol. 13, no. 5, 1 September 2007 (2007-09-01), pages 1551-1559, XP011194019 ISSN: 1077-260X
• KUWAHARA H ED - TAIJI SAKAMOTO ET AL: "Technologies for 40 Gb/s and 100Gb/s transmission" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031391402 ISBN: 978-1-55752-856-8

**Description**

The invention relates to optical communication, in particular to dual-polarization optical bursts for reception by a coherent receiver, to a corresponding transmitter for generating the burst and to a corresponding coherent receiver.

In fiber optics communications, two ways to detect the received light exist: direct detection and coherent detection. In direct detection based systems, the photodetector at the receiver is typically directly fed by on-off modulated light (NRZ or RZ) and the resulting current of the photodetector corresponds to the received optical power.

In coherent detection receivers, the received optical light is coherently super-positioned with a single-frequency optical local oscillator (LO) signal. Typically, there is a frequency offset between the carrier frequency and the frequency of the LO signal.

Such a coherent receiver uses algorithms in the digital domain to adjust the receiver for recovery of the received signal.

One example of such an algorithm is the adaptive algorithm to adjust a polarization demultiplexing filter in a dual-polarization coherent receiver. Such a dual-polarization coherent receiver receives a dual-polarization optical signal having a signal in a first polarization and a signal in a second polarization. A polarization demultiplexing filter has to be adjusted to recover the signals in the two polarizations. In case of a PSK (phase shift keying) modulated signal, such as a QPSK (quadrature phase shift keying) modulated signal, the filter coefficients of the polarization demultiplexing filter may be adapted by using the CMA (constant modulus algorithm). The CMA is based on the idea that the amplitude of the PSK modulated signal is constant and thus minimizes - in a mean squares sense - the error between the actual amplitude and the expected constant amplitude. The CMA is described in the document "Digital Filters for Coherent Optical Receivers", Seb J. Savory, Optics Express, Vol. 16, No. 2, Jan 21, 2008 pp. 804-817. The discussion of the CMA is hereby incorporated by reference. In the following this document is referred to as [Savory2008].

Another example of such an algorithm is the algorithm for frequency offset estimation in a coherent receiver, where the offset between the carrier frequency and the frequency of the LO signal is estimated.

Ben Yoo S J: "Optical Packet and Burst Switching Technologies for the Future Photonic Internet", Journal of Lightwave Technology, IEEE Sevice Center, New York, NY, US, vol. 24, no. 12, 1. December 2006, pages 4468-4492, provides an overview of optical packet and burst switching technologies. Nelson L E et al.: "Tolerance of 46-Gb/s dual-polarization quadrature-phase shift keyed signals to multiple-path interference", Optical Fiber Communication - Includes post deadline papers, 2009, OFC 2009, Conference on, IEEE, Piscataway, NJ, USA, 22. March 2009, pages 1-3, describes a method for measuring the tolerance to multiple-path interference (MPI) of a dual-polarization QPSK transceiver with coherent detection. EP2071754 describes a method and system using polarization multiplexed OFDM.

In classical circuit-based optical communication, the convergence time of such adaptive algorithms performed in the digital domain of the coherent receiver is not critical. The situation is different in networks based on optical packets (i.e. optical bursts). It should be noted that throughout the application, the term (optical) packet is synonymous to the term (optical) burst. The application covers both OPS (optical packet switching) based systems and OBS (optical burst switching) based systems.

In such networks, optical packets are routed from a source network node to a destination node. The coherent receiver has to operate in burst mode and has to be capable to detect short bursts of data. Since the source of the bursts and thus the waveform of the received optical signal may vary from burst to burst, the receiver needs to adapt to a new burst in a very fast manner. Therefore, the convergence time of the algorithms becomes one of critical parame-ters of the system. All currently known coherent receiver architectures use adaptive algorithms that have convergence times too long for a burst mode system. Especially, no optical coherent receiver for 40 Gb/s, 100 Gb/s or higher data rates is designed to operate in burst mode.

Due to the long convergence time of conventional coherent detection, optical packets are currently incompatible with coherent detection. This applies in particular for coherent receivers for a dual-polarization modulation format where the optical signal comprises a signal in one polarization and a signal in the orthogonal other polarization. This modulation format is also called polarization division multiplexing (PDM).

Hence, it is an object of the present invention to provide a modulation method for generating optical bursts to be received by a coherent burst mode receiver, which allows for fast convergence in the receiver. Further objects of the invention are to provide a corresponding transmitter for generating the optical bursts and a corresponding coherent burst mode receiver.

These objects are achieved by the method, the transmitter and the receiver according to the independent claims.

The invention makes use of a specific modulation for the burst header associated to one or more specific functions for fast convergence of one or more algorithms in the coherent receiver. Preferably, the header modulation format respects at least one of these two conditions:

    1. The header should be detectable by a non-coherent receiver, or
    2. the header should be detectable by a coherent receiver but without the need to perform adaptive algorithms; thus, the header should be not a polarization multiplexed signal.

In case of 1, the receiver may comprise an additional non-coherent detector in order to separately detect the header.

The payload of an optical burst does not have restriction and may be based for example on PDM-QPSK or PDM-BPSK modulation formats. The condition on the header may be associated with a specific function capable of fast convergence during header detection in order to be ready to process the payload that follows the end of the header. A way to assure a fast convergence is to inject a single polarization and preferably a simple modulation format like OOK (on-off keying).

In this case, the state of polarization and the frequency detuning between the source laser and the local oscillator can be easily detected due to a strong simplification in the adaptive algorithms. One or more predetermined sequences of bits may be inserted into the header in order to start data-aided fine channel estimation.

A first aspect of the invention relates to a modulation method for generating optical bursts (i.e. optical packets). Such an optical burst comprises a first single-polarization header section and a dual-polarization payload section. In addition, the burst may comprise one or more further header sections. The first header section is a single-polarization signal in a first polarization. The first header section may use a different modulation format than the modulation format of the two signals of the dual-polarization payload section. The payload section has a signal in the first polarization and a signal in a second polarization. Preferably, the two signals of the payload section may be PSK modulated signals, such as BPSK, QPSK, or DBPSK modulated signals. Preferably the symbol rate of the first header section is lower than the symbol rate of the payload section (e.g. 2.5 Gsymbols/s for the header section in comparison to 28 Gsymbols/s for the payload section).

In the coherent receiver, the first header section may be used to determine parameters characteristic for the state of polarization of the single-polarization header signal to ease polarization demultiplexing of the payload. In case a signal is polarized along one specific direction (such as the first header section), it is possible to estimate its state of polarization and determine filter coefficients for recovering the signal in the specific polarization without passing through a slow adaptive algorithm like the CMA. A method for estimating parameters characteristic for the state of polarization and determining filter coefficients for a single-polarization signal is described in "Optical Homodyne Receiver Comprising Phase and Polarization Diversities with Digital Signal Processing", Satoshi Tsukamoto, Yuta Ishikawa, and Kazuro Kikuchi, ECOC 2006, Paper Mo4.2.1. The paper, in particular its method for polarization combining to recover the signal is hereby incorporated by reference. In the following the paper is referred to as [Kikuchi2006].

Accordingly, providing a single-polarization header section allows in the coherent receiver to evaluate the received first header section in the first polarization and - based thereon - to compute in a very fast way filter coefficients of the polarization demultiplexer coefficients, in particular the central tap coefficients of two FIR filters associated with the recovery of the first polarization. Therefore, it is not necessary to perform a CMA to determine these filter coefficients. Nevertheless, the determined filter coefficients may be used as initial values for a CMA to reduce the convergence time of a later performed CMA.

Preferably, the first header section uses a simpler modulation format than the payload section. E.g. the first header section may be an OOK modulated signal which can be easily detected without the need of coherent detection. Alternatively, DBPSK modulation may be used for the first header which can also detected without coherent detection.

The symbol rate of the first header section is preferably much lower than the symbol rate of the payload section (e.g. 2.5 Gb/s for the header in comparison to 28 Gsymbols/s for the payload section). The reduced symbol rate further simplifies the header detection.

The first header section may indicate the source and the destination of the burst.

Preferably, a portion of the header is a constant optical signal. E.g. the burst may comprise a second single-polarization header section in either the first or second polarization being a constant optical signal (e.g. constant over 8 symbols or more). The constant optical signal may be an OOK (on-off keying) modulated signal, where the signal is in the on-state (i.e. all bits at 1).

The constant optical signal allows easy frequency offset estimation: At the receiver side, the interferences between the local oscillator signal at a given frequency and the carrier wave signal at a slightly different frequency produces a sinusoidal signal on the photodiode. The frequency of this signal gives the frequency difference between the local oscillator and the carrier frequency and can be used for carrier frequency offset estimation. With roughly 25 consecutive bits of the OOK header at 1 and a bit length of 400ps, a frequency estimation better than 100 MHz can be reached.

According to a preferred embodiment, the burst comprises a second header section being a single-polarization signal. Preferably, the second header section is in the second polarization. Thus, the second header section is preferably in a different polarization than the first header section. The second header section may be transmitted before or after the first header section. By evaluating the second header section in the second polarization, the second polarization may be estimated in a similar way than the first polarization. As similarly discussed in connection with the first header section, the receiver may evaluate the received second header section and - based thereon - compute one or more filter coefficients associated with the recovery of the signal in the second polarization. This may be done in accordance with the method described in said document [Kukuchi2006].

If the size of the header is not already critical, the burst may further comprise a dual-polarization learning sequence which contains data on both polarizations. Preferably, the learning sequence is known to the receiver. E.g. this sequence may be pseudo-random sequence which is known to the receiver. In case of a PDM-QPSK payload, the learning sequence may be a short PDM-QPSK PRQS sequence (pseudo-random quadrature sequence). Adding a learning sequence makes the system more robust and may improve the quality of the starting point for polarization demultiplexing and equalization of the payload. The learning sequence can be used to precisely estimate the coefficients of the filter for polarization demultiplexing and equalization. Moreover, the learning sequence gives also time for final frequency estimation and carrier phase estimation.

A second aspect of the invention relates to an optical transmitter using the modulation method as discussed above. The transmitter is configured to generate optical bursts, wherein a burst comprises a first header section and a payload section. The first header section is a single-polarization signal in a first polarization, whereas the payload section is a dual-polarization signal having a signal in the first polarization and a signal in a second polarization.

As discussed above, the first header section is preferably an OOK modulated signal. The signals of the payload section may be QPSK modulated signals. The dual-polarization payload section may be generated by a PDM-QPSK modulator comprising two QPSK modulators: a first QPSK modulator associated with the first polarization, and a second QPSK modulator associated with the second polarization.

Each QPSK modulator may comprise separating means for separating an optical carrier wave and feeding the wave into a first and in a second modulator arm. The first modulator arm has a first Mach-Zehnder (MZ) modulator, and the second modulator arm has a second MZ modulator. For generating a QPSK modulated signal, phase shift means for introducing an additional phase shift between the first arm and the second arm are used in each QPSK modulator. For generating quadrature and inphase components, the phase shift corresponds to $\pi/2$ (or $3/2\cdot\pi$, $5/2\cdot\pi$ etc.). Further, each QPSK modulator comprises combining means for combining the signals in both QPSK modulator arms.

Preferably, the OOK modulated first header section is also generated by using said PDM-QPSK modulator. When generating the first header section, the first MZ modulator of the first QPSK modulator is configured to output a BPSK modulated signal. In contrast, the second MZ modulator of the first QPSK modulator is configured to output a constant signal essentially having the same amplitude as the BPSK modulated signal. Also, the phase shift means of the first QPSK modulator are not adjusted to a phase shift of $\pi/2$ but to a phase shift of O, $n\cdot\pi$, or $-n\cdot\pi$, with n being a natural number. When generating the OOK modulated first header section, the second QPSK modulator provides to the transmitter output essentially no light or only a low level of light in comparison to the first QPSK modulator.

When configuring the PDM-QPSK modulator as discussed above, the PDM-QPSK modulator outputs an OOK modulated signal, such as the first header section of the burst.

This allows to use the same PDM-QPSK modulator both for OOK modulation of the header and for PDM-QPSK modulation of the payload. An additional OOK modulator is not necessary.

The application also relates to a method for generating an OOK modulated header section by a PDM-QPSK modulator. For generating the OOK modulated header section, the PDM-QPSK modulator is configured as discussed above.

A third aspect of the invention relates to a coherent optical receiver for receiving optical bursts generated by the modulation method and the corresponding transmitter as discussed above. Accordingly, such an optical burst comprises a first header section in form of a single-polarization signal in the first polarization and a payload section in form of a dual-polarization signal having a signal in the first polarization and a signal in the second polarization.

The receiver comprises a polarization demultiplexer (typically implemented by polarization demultiplexing filter) for recovering signals in the two polarizations. The receiver is configured to compute one or more parameters characteristic for the polarization state of the received single-polarization signal based on the received first header section. The polarization demultiplexer is adjusted in dependency of the one or more parameters.

The one or more parameters may be one or more filter coefficients of a polarization demultiplexing filter or may be values which are used to compute one or more filter coefficients. Since the first header section is a single-polarization signal, the one or more parameters can be easily computed. This may be done in accordance with the method described in said document [Kikuchi2006].

In case a polarization demultiplexing filter is used, the receiver preferably comprises coefficients computing means for computing the filter coefficients of the polarization demultiplexing filter. The coefficients computing means are configured to compute one or more filter coefficients of the polarization demultiplexing filter portion associated with the recovery of the first polarization based on the received first header section. Since the first header section is a single-polarization signal, the coefficients can be easily computed. This may be done in a similar way as described in said document [Kikuchi2006]".

According to a preferred embodiment, the polarization demultiplexing filter comprises four FIR (finite impulse response) filters in a butterfly structure. Each FIR filter may be a single-tap filter, however, preferably each FIR filter is a multi-tap filter. This allows for further signal equalization. Two of the four FIR filters are for recovering the first polarization and the two other of the four FIR filters are for recovering the second polarization. In this case, the coefficients computing means are preferably configured to compute the coefficients of the central taps of the two FIR filters for recovering the first polarization based on the evaluation of the received first header section (in case each FIR filter has only one tap, this tap is the central tap). In comparison to the coefficients of the central taps, the coefficient values of the other taps are usually low and are used to provide equalization and thus improve receiver performance. These coefficients may be determined by evaluating a received learning sequence.

Preferably, each of the FIR filters comprises more than one filter tap. In this case the polarization demultiplexing filter can be also used for equalization. Alternatively, a separate equalization filter may be used and the four FIR filters may be single-tap FIR filters.

Similarly to the method described in said document [Kikuchi2006], two central tap coefficients may be computed based on the evaluation of the received first header section:

- the coefficient $h_{11}(c)$ of the central tap of the FIR filter connecting a first input of the polarization demultiplexing filter to a first output of the polarization demultiplexing filter, the first output associated with the first polarization, and
- the coefficient $h_{12}(c)$ of the central tap of the FIR filter connecting a second input of the polarization demultiplexing filter to the first output of the polarization demultiplexing filter.

These central coefficients at position $c$ may be determined according to the following formulas:

$$h_{11}(c) = \sqrt{\alpha} \cdot e^{-j\delta}$$

$$h_{12}(c) = \sqrt{1-\alpha}$$

with

$$\text{with} \begin{cases} \alpha = \dfrac{|\overline{r}|}{|\overline{r}|-1} \quad, \quad \delta = \arg(\overline{r}) \quad, \quad \overline{r} = average\left(\dfrac{x_1(k)}{x_2(k)}\right) \quad or \\[4mm] \alpha = \dfrac{1}{|\overline{r}|+1} \quad, \quad \delta = -\arg(\overline{r}) \quad, \quad \overline{r} = average\left(\dfrac{x_2(k)}{x_1(k)}\right) \end{cases}$$

Here, $x_1(k)$ denotes a sample at time instance k at the first input of the polarization demultiplexing filter or upstream thereof, $x_2(k)$ denotes a sample at time instance k at the second input of the polarization demultiplexing filter or upstream thereof, and average() denotes the average over a plurality of time instances k. Preferably, either the upper or lower formulas are selected in or-der to have $\overline{r} < \dfrac{1}{2}$. .

The ratio $\overline{r}$ may be computed based on the following formulas, where the averaging is performed over N samples:

$$\begin{cases} \overline{r} = average\left(\dfrac{x_1(k)}{x_2(k)}\right) \quad = \dfrac{1}{N}\sum_k \dfrac{x_1(k)}{x_2(k)} \quad or \\[4mm] \overline{r} = average\left(\dfrac{x_2(k)}{x_1(k)}\right) \quad = \dfrac{1}{N}\sum_k \dfrac{x_2(k)}{x_1(k)} \end{cases}$$

E.g. a central tap may be located at position $c = \lceil T/2 \rceil$ (= ceil (T/2); larger integer of T/2), where T is the number of taps per FIR filter (with $T \geq 1$) and the lowest tap position is 1 and the highest tap position is T.

Preferably, the burst comprises a second header section in addition to the first header section, with the second header section being a single-polarization signal in the second polarization. In this case, the receiver is preferably configured to compute one or more parameters characteristic for the polarization state of the received single-polarization signal of the second header section based on the received second header section. These parameters are used for adjusting the polarization demultiplexer. The parameters may be filter coefficients or values used for determining the filter coefficients.

Filter coefficients associated with the recovery of second polarization can be computed based on the received second header section in the same way as discussed above in connection with the first polarization. The resulting central filter coefficients for the second polarization may be used for initialization of the CMA.

Alternatively, determined parameters characteristic for the polarization state of the first header section in the first polarization are used for estimating the second polarization, i.e. for estimating parameters characteristic for the second polarization. Here, it is assumed that the first and second polarizations are orthogonal. Thus, it is possible to determine parameters for demultiplexing the second polarization when the first polarization is known.

The coefficients computing means may be configured to compute filter coefficients associated with the recovery of the second polarization based the one or more parameters characteristic for the polarization state of the first header section, in particular based on the computed filter coefficient associated with the recovery of the first polarization. For this computing, orthogonality between both polarizations is assumed.

If the two FIR filters $h_{11}$ and $h_{12}$ for recovery of the first polarization are known, the filter coefficients of the two other filters $h_{22}$ and $h_{21}$ may be computed based on the following formulas:

$$h_{22}(n) = h_{11}^{\bullet}(T - n + 1)$$

$$h_{21}(n) = -h_{12}^{\bullet}(T - n + 1)$$

Here, T is the number of taps, n is the tap index, and h* represents the complex conjugate.

As discussed above, preferably, a portion of the header is a constant optical signal. The receiver comprises carrier frequency offset estimation means. The carrier frequency offset estimation means are preferably configured to perform carrier frequency offset estimation based on an electrical signal derived from the constant optical signal. Such electrical signal may be a sinusoidal signal downstream of a photodiode which is produced by interfering the constant optical signal and the local oscillator signal of the coherent receiver.

As discussed above, the receiver preferably comprises coefficients computing means for computing filter coefficients of the polarization demultiplexing filter. Preferably, the coefficients computing means are configured to select an algorithm from a plurality of algorithms. The selection may be performed in dependency of the actually evaluated section of the burst (header, learning sequence or payload). The different algorithms may include the CMA, an algorithm for determining central filter coefficients based on [Kikuchi2006] and a data-aided algorithm such as an MMSE (minimum mean square error) algorithm.

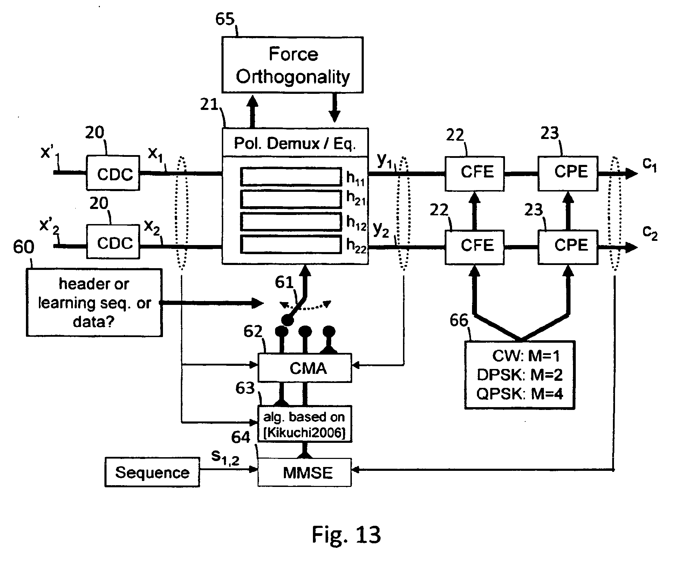

According to a further preferred embodiment, the receiver comprises carrier frequency offset estimation means which are configurable in dependency of a parameter M, wherein the carrier frequency offset estimation means are configured to perform an $M^{th}$ power operation. The parameter M depends on the evaluated modulation format. This will be explained in more detail in connection with Fig. 13.

Preferably, the header (e.g. the first header section or any other header section) comprises information indicating the transmitter and/or the optical transmission path. This information can be used for chromatic dispersion (CD) compensation. By using this information, a CD filter may be adjusted to compensate the dispersion accumulated from the transmitter to the receiver. The total cumulated dispersion between the transmitter and the receiver is preferably known to the receiver and stored in memory. Such a concept is described in the Applicant's European patent application 09290325.1 filed on May 5, 2009. The disclosure of said European patent application is hereby incorporated by reference. The header of a burst may comprise any information described in said European patent application in connection with CD compensation. Accordingly, the coherent receiver may evaluate this information for adapting the CD compensation as described in said European patent application.

In a burst mode coherent receiver, the power of each burst may be different (e.g. as much as 10 dB) as each burst may propagate through different paths of the networks. These power fluctuations will introduce large fluctuations of the signal amplitude in the coherent receiver (if the intensity varies by a factor of 10, this means that the amplitude has changed by a factor of roughly 3). If the signal amplitude is too low at the analog-to-digital converter (ADC), the digitalization will be done poorly and the signal performance will be degraded. To overcome this problem, the receiver may comprise a controllable optical amplifier (e.g. a semiconductor optical amplifier) to adjust the power of the local oscillator signal.

The optical amplifier may be controlled in such a way that the amplitude of the amplified local oscillator signal times the amplitude of the signal is essentially constant.

The optical amplifier may be controlled in dependency of:

- a signal downstream of a separate photodiode used for tracking the power of the optical bursts,
- a signal downstream of a separate photodiode used for reading the first header portion, or
- a signal generated by summing the signals from a plurality of analog-to-digital converters in the receiver path.

It should be noted that not for all embodiments all common features of the independent claims are essential. E.g. for said embodiment having an optical amplifier, it not necessary to have a first header section in form of a single-polarization signal (when the payload is a dual-polarization signal). The payload may be also a single-polarization signal. Thus, some embodiments do not necessarily require a first header section being a single-polarization signal in a first polarization (when the payload is a dual-polarization signal) or require a dual-polarization payload section.

Moreover, it should be noted that the above remarks relating to a particular aspect of the three aspects of the invention are basically also applicable to the other aspects of the invention.

In addition, it should be noted that basically the above mentioned embodiments of the invention can be arbitrarily combined. The disclosure of the invention also covers other claim combinations than the claim combinations which are explicitly given by the back references in the dependent claims, i.e. the claims can be basically combined in any order.

The invention is explained below in an exemplary manner with reference to the accompanying drawings, wherein

Fig. 1      illustrates an embodiment of the structure of an optical burst (optical packet);

Fig. 2      illustrates an embodiment of a coherent receiver;

Fig. 3      illustrates an exemplary polarization demultiplexing/ equalizing filter;

Fig. 4      summarizes use of the burst sections for determining the parameters of the coherent receiver;

Fig. 5      illustrates an embodiment of the digital part of a coherent burst mode receiver;

Fig. 6      illustrates an embodiment of a conventional Mach-Zehnder modulator and its transfer curve;

Fig. 7      illustrates an embodiment of a QPSK modulator;

Fig. 8      illustrates the generation of an OOK modulated signal based on the QPSK modulator in Fig. 7;

Fig. 9      illustrates an embodiment of a PDM-QPSK modulator;

Fig. 10     illustrates the generation of an OOK modulated signal based on the PDM-QPSK modulator in Fig. 9;

Fig. 11     illustrates a first embodiment for controlling an optical amplifier ampli- fying an LO signal and for generating an OOK header signal;

Fig. 12     illustrates a second embodiment for controlling an optical amplifier amplifying an LO signal and for generating an OOK header signal; and

Fig. 13     illustrates an alternative embodiment of the digital part of the cohe- rent burst mode receiver.

According to the invention, an optical burst (optical packet) comprises a header section, which is a single-polarization signal and is polarized in one of the polarizations of the dual-polarization payload.

The header may be used to determine the state of polarization of the single-polarization signal and thus to ease polarization demultiplexing of the dual-polarization payload section. Since the header is polarized along a specific direction (at least for a period of time), it is possible to estimate its state of polarization without passing through a slow adaptive algorithm like the CMA. A method for estimating the state of polarization for a single-polarization signal and for determining filter coefficients for signal recovery is described in said document [Kikuchi2006]. Once the filter coefficients for the first polarization are known, the filter coefficients for the second polarization may be simply computed based on an assumed orthogonality of the two polarizations as will be discussed in detail below. Alternatively, a second header section in the second polarization may be evaluated to determine filter coefficients of the second polarization. When the payload begins, the polarization demultiplexing algorithm can start demultiplexing the two orthogonal polarizations.

Moreover, the header may be used to determine the frequency difference between the frequency of the local oscillator and the carrier frequency, without the need of passing through an algorithm with a large memory.

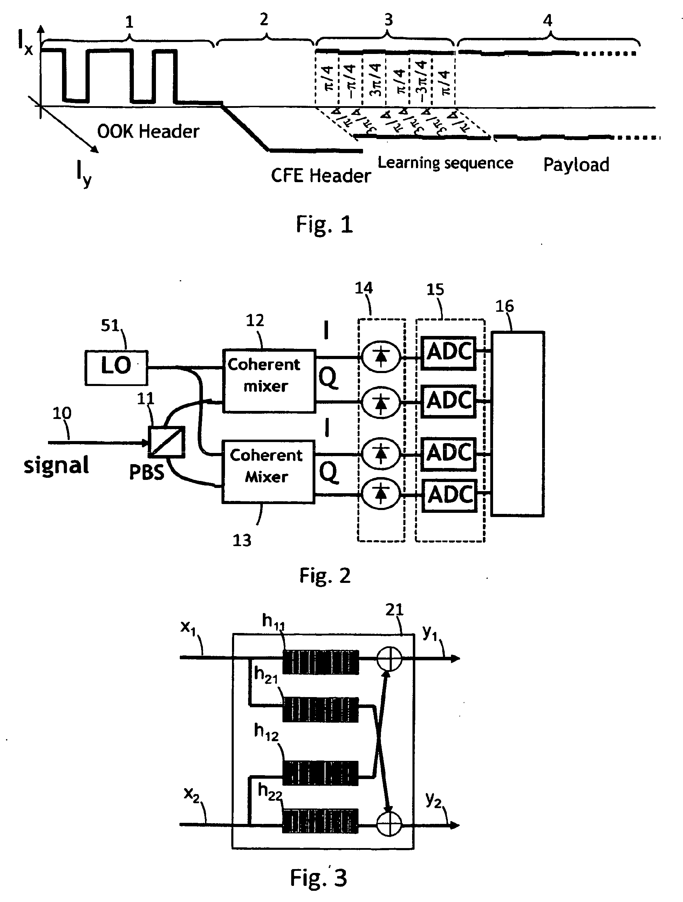

Fig. 1 illustrates an exemplary embodiment of an optical burst. The optical burst comprises a header and a payload 4. The header comprises a first header section 1 and a second header section 2. Further, an optional learning sequence 3 may be used. E.g. the first header section 1 has a length of 16-64 bits, the second header section 2 has half the bits of the first header section 1, and the learning sequence 3 has length of a few hundred symbols.

According to a preferred embodiment of the invention, the header (i.e. the header section 1 and 2) of the optical burst is encoded in an OOK modulation format, whereas the payload 4 of the burst is encoded in a PDM-QPSK modulation format. Instead of PDM-QPSK, PDM-BPSK may be used for the modulation of the payload 4. Preferably, the bitrate of the header is much lower than the symbol rate of the payload section 4 (e.g. 2.5 Gb/s compared to 28 Gsymbol/s = 112 Gb/s).

The first header section 1 is in a first polarization (see axis $I_x$), whereas the second header section 2 is in the second polarization (see axis Iy). Instead, the second header section 2 may be in the first polarization or may be omitted.

One PSK modulated signal of the PDM payload section 4 is in the first polarization (see $I_x$) and the other PSK modulated signal of the PDM payload section 4 is in the second polarization (see $I_y$).

According to a method similar to the method disclosed in the document [Kikuchi2006], the polarization axis $I_x$ of the first header section 1 may be determined by evaluating the received first header section 1. By using this method, parameters characteristic for the polarization of the first header section may be computed. Since the first polarization of one of the signals of the payload section 4 corresponds to the polarization of the first header section 1, this also gives the first polarization of the payload section 4.

Parameters characteristic for the second polarization of the payload section 4 (which is orthogonal or almost orthogonal) can be determined based on the parameters characteristic for the first polarization by mathematical functions as will be explained below. By using the method similar to the one in [Kikuchi2006], an estimation of the first polarization axis can be performed. This will determine one polarization of the payload and help defining the other polarization through mathematical functions.

Alternatively, the second polarization (i.e. parameters characteristic for the second polarization) may be estimated based on the second header section 2 in the same way as estimating the first polarization based on the first header section 1. The alternative approach has the advantage of a higher accuracy in case the two polarizations (which were orthogonal at the transmitter) are no more orthogonal at the receiver (e.g. due to polarization dependent loss - PDL).

Fig. 2 shows an embodiment of a coherent receiver for receiving a dual-polarization burst, such as the burst in Fig. 1. A polarization beam splitter (PBS) 11 splits a received optical signal 10 into a first optical wave and a second optical wave, with the polarizations of the first and second optical waves being orthogonal. Since the axes of the PBS 11 are not aligned with the polarization axes of the dual-polarization signal, the signals of the first and second optical waves typically do not correspond to the two signals of the dual-polarization signal; this misalignment is later compensated by a polarization demultiplexing filter in the electrical domain of the receiver. The first optical wave is superimposed with an LO signal in a first mixer 12, whereas the second optical wave is superimposed with an LO signal in a second mixer 13.

The mixers 12 and 13 output inphase (I) and quadrature phase (Q) components which are optical-to-electrical converted by optical-to-electrical converters 14. Afterwards, the four signal components are analog-to-digital converted by analog-to-digital converters (ADCs) 15. The further processing of the signal components is performed in the digital signal processing part 16 of the receiver, e.g. in a DSP (digital signal processor).

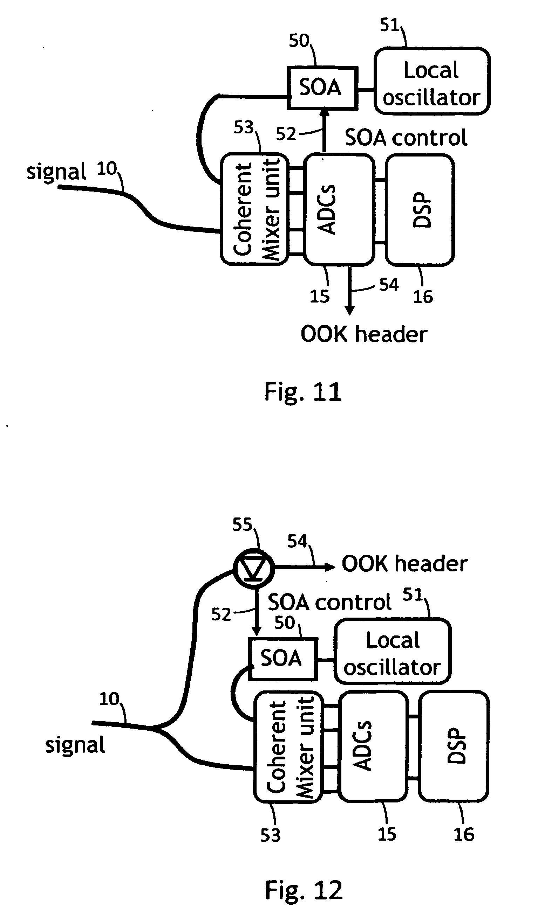

The receiver may comprise an additional photodiode for detecting the header as shown in Fig. 12.

In the following, the polarization demultiplexing process and the computing of the filter coefficients of the polarization demultiplexing filter based on one or both single-polarization header sections 1 and 2 is discussed more in detail.

It is assumed that the polarization demultiplexing is performed downstream of the ADCs (15) by 4 FIR filters $h_{11}$, $h_{21}$, $h_{12}$ and $h_{22}$ organized in a butterfly structure as shown in Fig. 3. The first number in the index relates to the output ("1" for $y_1$ or "2" for $y_2$), whereas the second number in the index relates to the input ("1" for $x_1$ or "2" for $x_2$).

Complex-valued samples of a first input signal component $x_1$ are fed to two FIR filters $h_{11}$, $h_{21}$ and complex-valued samples of a second signal component $x_2$ are fed to FIR filters $h_{12}$, $h_{22}$. The outputs of FIR filters $h_{11}$, $h_{12}$ and the outputs of FIR filters $h_{21}$, $h_{22}$ are added, yielding samples of the first output signal component $y_1$ and samples of the second output signal component $y_2$. The complex-valued first input signal $x_1$ is derived from the digital inphase and quadrature components downstream of the coherent mixer 12, and the complex valued second input signal is derived from the digital inphase and quadrature components downstream of the coherent mixer 13.

The polarization demultiplexing filter 21 is used to rotate the received signal components $x_1$ and $x_2$ for recovering the initial polarization components as multiplexed in the transmitter and for removing interferences between the two polarization components.

A basic rotation function of a polarization demultiplexer having output signals $y_1$ and $y_2$ (which should correspond to the original polarization components) may be specified as:

$$\begin{pmatrix} y_1(k) \\ y_2(k) \end{pmatrix} = \begin{pmatrix} \cos\theta\, x_1(k) + \sin\theta\, x_2(k) \\ -\sin\theta\, x_1(k) + \cos\theta\, x_2(k) \end{pmatrix} = \begin{pmatrix} \cos\theta & \sin\theta \\ -\sin\theta & \cos\theta \end{pmatrix} \begin{pmatrix} x_1(k) \\ x_2(k) \end{pmatrix}$$

The elements of the rotation matrix represent coefficients of 4 single-tap FIR filters arranged in a butterfly structure.

To improve the accuracy of the demultiplexer and to use the filter also for signal equalization, the filter may not simply describe a rotation matrix but information from neighboring samples around the main samples may be also taken into account as indicated in the embodiment of Fig. 3 having 9 taps per FIR filter $h_{11}$, $h_{21}$, $h_{12}$, $h_{22}$.

Instead of four multi-tap FIR filters used for polarization demultiplexing and equalization, four single-tap FIR filters in a butterfly structure may be used for polarization demultiplexing, which are followed by an equalizer. Alternatively, the equalizer may be connected upstream of the single-tap FIR filters. Further, in both cases the separate equalizer may be formed by two FIR filters (one FIR filter per signal path) or four FIR filters in a butterfly structure.

The well-known CMA is a technique for computing and updating of the filter coefficients, thereby allowing to perform correct polarization demultiplexing in case the input signal is a polarization multiplexed signal like a PDM-QPSK modulated signal. In case of a single-polarization input signal (such as in case of the first header section 1 and the second header section 2), the CMA is not needed since the state of polarization of the input signal can be easily computed, for example based on the equations provided in [Kikuchi2006].

In the following, parameters characteristic for the state of polarization of the single-polarization header section 1 or 2 are determined and filter coefficients of the central tap of the two associated FIR filters are computed based on the equations presented in [Kikuchi2006].

The two input signals $x_1(k)$ and $x_2(k)$ form the input vector $X_k = \begin{pmatrix} x_1(k) \\ x_2(k) \end{pmatrix}$.

Based on equations (6) and (7) in [Kikuchi2006], one may determine an average ratio value $\bar{r}$ indicating the ratio between the signal $x_1$ and signal $x_2$ over a plurality of samples of the single-polarization header.

$$\begin{cases} \bar{r} = average\left(\dfrac{x_1(k)}{x_2(k)}\right) = \dfrac{1}{N}\sum_k \dfrac{x_1(k)}{x_2(k)} & or \\[4mm] \bar{r} = average\left(\dfrac{x_2(k)}{x_1(k)}\right) = \dfrac{1}{N}\sum_k \dfrac{x_2(k)}{x_1(k)} \end{cases}$$

Either the upper or the lower equation is used such that $|\bar{r}| < \frac{1}{2}$. E.g. the sums may be computed according to the following formulas

$$\begin{cases} \dfrac{1}{N}\sum_k \dfrac{x_1(k)}{x_2(k)} = \dfrac{1}{2l+1}\sum_{j=-l}^{l} \dfrac{x_1(k+j)}{x_2(k+j)} & or \\[4mm] \dfrac{1}{N}\sum_k \dfrac{x_2(k)}{x_1(k)} = \dfrac{1}{2l+1}\sum_{j=-l}^{l} \dfrac{x_2(k+j)}{x_1(k+j)} \end{cases}$$

Similarly to equation (8) in [Kikuchi2006], one can determine parameters $\alpha$, $\delta$ indicating the state of polarization of the single-polarization header signal based on the average ratio value $\bar{r}$:

$$\left\{ \begin{array}{ll} \alpha = \dfrac{|\overline{r}|}{|\overline{r}|-1} \quad , & \delta = \arg(\overline{r}) \quad , \qquad or \\[4mm] \alpha = \dfrac{1}{|\overline{r}|+1} \quad , & \delta = -\arg(\overline{r}) \quad , \end{array} \right.$$

The upper (lower) equations for $\alpha$, $\delta$ are used in case $\overline{r}$ is computed according to the upper (lower) equations.

As given in equation (1) in [Kikuchi2006], the two separated components after the polarization beam splitter (PBS) can be written as $\begin{pmatrix} \sqrt{\alpha}E_s e^{j\delta} \\ \sqrt{1-\alpha}E_s \end{pmatrix}$. Here, $E_s$ denotes the complex amplitude of the incoming optical signal, $\alpha$ denotes the power ratio of the two components separated by the PBS, and $\delta$ denotes the phase difference between both components.

The parameters $\alpha$ and $\delta$ can be used to compute filter coefficients for the central taps of the polarization demultiplexing filter. As discussed above, the polarization demultiplexing filter in Fig. 2 is composed by 4 filters $h_{11}$, $h_{21}$, $h_{12}$ and $h_{22}$. Preferably, each filter is composed of T taps (with $T \geq 1$) so that the coefficients form a vector from $h_{xy}(1)$ to $h_{xy}(T)$.

In the case of a single-polarization signal, the two input signals $x_1$, $x_2$ are combined to a single output signal (either $y_1$ or $y_2$). In the following it is assumed that the signal of the first polarization ($I_x$) is recovered as $y_1$, whereas the signal of the second polarization ($I_y$) is recovered as $y_2$.

For recovering the header section 1 in first polarization only the filters $h_{11}$ and $h_{12}$ are used. Similar to the maximal-ratio combing equation (9) in [Kikuchi2006], the central tap coefficients at position $c = \lceil T/2 \rceil$ (= ceil(T/2); larger integer of T/2) can be set to:

$$h_{11}(c) = \sqrt{\alpha} \cdot e^{-j\delta}$$

$$h_{12}(c) = \sqrt{1-\alpha}$$

In case of having only one tap per filter, this tap is the central and is computed as given above.

Here, $\alpha$, $\delta$ are polarization parameters of the header section 1 in the first polarization. The equations for the central taps $h_{22}(c)$ and $h_{21}(c)$ are identical to the equations for $h_{11}(c)$ and $h_{12}(c)$. However, the parameters $\alpha$, $\delta$ are polarization parameters of a signal in the second polarization, e.g. of the second header section 2.

The polarization parameters $\alpha$, $\delta$ may be used to initialize the central taps of the two filters $h_{11}$ and $h_{12}$. Based on the initialized central taps of the two filters, the CMA may be run in order to adaptively determine the correct value for the remaining taps (and preferably also for the central taps) of the two filters. In contrast to the conventional CMA without such an initialization, this procedure allows quick convergence and high precision. E.g. the CMA may be started with the beginning of the learning sequence 3.

Thus, once the state of polarization is known, it is possible to initialize the central taps of the respective FIR filters to the correct values. In this way the convergence of the CMA (that could be employed even in case of a single polarization input) is faster.

Instead of using the CMA, one may also use a data aided algorithm to determine the remaining filter coefficients (and optionally to determine the central taps more precisely). The learning sequence 3 is preferably a sequence known to the receiver, e.g. a PDM-QPSK PRQS sequence, and may be used as a basis for performing a data aided algorithm.

In particular in case of PDM-BPSK modulation, one could also use a decision directed algorithm to determine the remaining tap values (and optionally to determine the central taps more precisely). Such a decision directed algorithm is described in the European application 08290902 having the title "A decision directed algorithm for adjusting a polarization demultiplexer in a coherent detection optical receiver". The description of the decision directed algorithms in this application is hereby incorporated by reference.

The same approaches as discussed in connection with the filters $h_{11}$ and $h_{12}$ may be used for the other two

filters $h_{22}$ and $h_{21}$ (however, the polarization parameters $\alpha$, $\delta$ are determined by evaluating the second header section 2 in the second polarization $I_y$).

Alternatively, one may determine the central taps of the other two filters $h_{22}$ and $h_{12}$ or the filter coefficients of all taps of these filters based on determined filter coefficients of the two filters $h_{11}$ and $h_{12}$ (and based on the assumption of orthogonality). In other words: Starting from two filters which are partly or completely known, filter coefficients of the other two filters corresponding to the orthogonal polarization are determined. Similar to the equations in section 5.2 of [Savory2008], based on two filters $h_{11}$ and $h_{21}$ that correctly demultiplex and equalize an incoming single-polarization signal (here: the header section 1), the two other filters $h_{21}$ and $h_{22}$ can be computed by the following formulas:

$$h_{22}(n) = h_{11}^{\bullet}(T - n + 1)$$

$$h_{21}(n) = -h_{12}^{\bullet}(T - n + 1)$$

Here, T is the number of taps (with T $\geq$1), n is the tap index, and h* represents the complex conjugate. These equations are based on an assumed orthogonality between the first polarization $I_x$ and the second polarization $I_y$. This approach has the advantage that all filter coefficients of the filters $h_{21}$ and $h_{22}$ can be directly determined without the need to adaptively find the correct coefficients for the non-central taps.

It should be noted that it also possible to compute the central taps $h_{22}(c)$ and $h_{21}(c)$ according to the following formulas:

$$h_{22}(c) = h_{11}^{\bullet}(c)$$

$$h_{21}(c) = -h_{12}^{\bullet}(c)$$

These central tap values $h_{22}(c)$ and $h_{21}(c)$ may be used to initiate the CMA which determines the remaining filter coefficients. Alternatively, a data aided algorithm based on a learning sequence may be used for determining the remaining filter coefficients.

The frequency offset between the LO signal and carrier wave is preferably determined based on the OOK modulated header. Preferably, the header contains a specific part (see header section 2) with all bits at 1, i.e. the signal is a constant signal with constant phase and constant amplitude. A constant signal with constant phase and constant amplitude may be also generated in a different way, e.g. by disabling the modulation of the carrier wave at the transmitter. At the receiver side, the interferences between the local oscillator at a given frequency and the continuous wave at a slightly different frequency produce a sinusoidal signal on the photodiode. The frequency of this signal corresponds to the frequency difference between the local oscillator and the carrier wave and can be used for frequency offset estimation. With roughly 25 consecutive bits of the OOK header at 1 and a bit length of 400 ps (i.e. 2.5 Gb/s), a frequency estimation better than 100 MHz can be reached. This is sufficient to start payload phase estimation, i.e. phase demodulation of the phase modulated payload. In Fig. 1, all the "ones" of the second header section 2 are sent along the second polarization, whereas the OOK header section 1 which may indicate source, destination and optionally further information is sent along the first polarization. Thus, also the second polarization can be estimated based on the concept in [Kikuchi2006]. This is more accurate than estimating the second polarization based on the estimation of the first polarization (when assuming orthogonality between the two polarization) if the two orthogonal signals at the transmitter are no more orthogonal at the receiver (e.g. due to PDL).

In the following, an exemplary method for determining the frequency offset based on a constant signal (such as header section 2) in the header is discussed in detail.

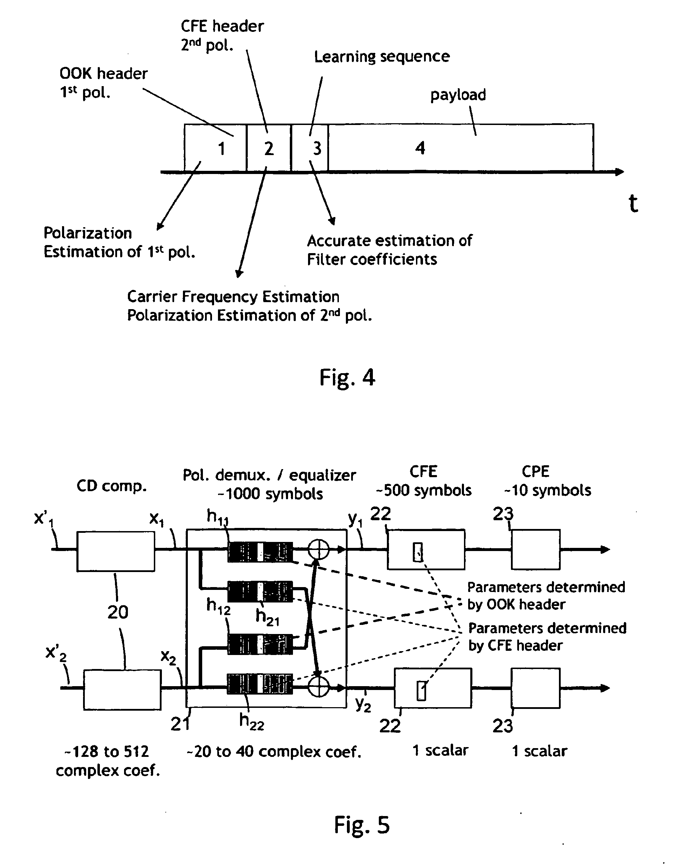

It is assumed that the frequency offset is determined in a carrier frequency estimation block (such as the block CFE 22 in Fig. 5) which is downstream of the polarization demultiplexing filter.

The electrical signal at the input of the carrier frequency estimation block which is based on the constant optical signal can be written

$$s_k = A_k \cdot \exp\left[j[\phi + (\omega_s - \omega_{LO})t_k + \phi_{N,k}]\right]$$

Here, $A_k$ is the amplitude of the signal which is basically constant; however, there may be some noise in the amplitude. The term $\phi$ relates to the phase which is constant. The term $\omega_s$ corresponds to the angular frequency of the optical carrier wave (e.g. around 200 THz), $\omega_{LO}$ corresponds to the angular frequency of the local oscillator, $t_k$ corresponds to the time at the k-th symbol, and $\phi_{N,k}$ corresponds to the phase due to noise. Typically, the frequency difference between the constant wave and the local oscillator is lower than 1 GHz.

Multiplying $s_k$ and the delayed complex conjugate $\overset{\bullet}{s}_{k-1}$ (delayed by a z-1block) thereof gives:

$$s_k \cdot \overset{\bullet}{s}_{k-1} = A_k A_{k-1} \exp\left[j[(\omega_s - \omega_{LO})T + (\phi_{N,k} - \phi_{N,k-1})]\right]$$

Averaging this quantity over N symbols results in:

$$\sum_N s_k \cdot \overset{\bullet}{s}_{k-1} = \exp\left[j(\omega_s - \omega_{LO})T\right] \sum_N A_k A_{k-1} \exp\left[j[(\phi_{N,k} - \phi_{N,k-1})]\right] = F_n$$

Here, the term containing $(\omega_s - \omega_{LO})$ has been sorted out from the sum since it does not depend on k. By determining the argument $\alpha_n = \angle F_n$, one can extract the offset $\Delta\omega = (\omega_s - \omega_{LO})$. The phase noise has a zero average and is canceled by the sum.

Fig. 4 is a temporal diagram of the exemplary header including header sections 1 and 2, the learning sequence 3 and the payload 4. Fig. 4 shows the use of the various received burst sections for determining parameters of the coherent receiver.

The OOK header section 1 in the first polarization is used for the estimation of the first polarization. Based on the OOK header section 1, central tap coefficients of the FIR filters $h_{11}$, $h_{12}$ in Fig. 2 may be determined.

The CFE (carrier frequency estimation) header section 2 in the second polarization is used for carrier frequency estimation (more exactly: for estimation of the frequency offset between the carrier frequency and the LO frequency). As discussed above, the CFE header section 2 comprises a sequence of N binary ones. Moreover, the second header section 2 in the second polarization can be used for estimation of the second polarization. Based on the second header section 2, central tap coefficients of the FIR filters $h_{22}$, $h_{21}$ in Fig. 2 may be determined.

Thus, by sending the second header section 2 along the second polarization, the parameters of the second polarization can be easily estimated based on the received single-polarization second header section 2. However, the constant signal may be sent along the first polarization (e.g. as part of the first header 1).

As discussed above, by evaluating the first header section 1 polarized along the first polarization and the second header section 2 polarized along the second polarization, the center taps of the polarization demultiplex-er/equalizer can be estimated. However, also the values of the other filter coefficient need to be determined. The filter coefficients of the other taps have typically a low absolute value (in comparison to the central filter taps) and are used for signal equalization, thereby improving receiver performance. The main purpose of the learning sequence 3 is to allow precise estimation of the filter coefficients of the filter used for polarization demultiplexing and equalization. Moreover, the learning sequence 3 can be used to perform a final estimation of the frequency offset and to perform a final estimation of the carrier phase. In data-aided algorithms, coefficients of a filter are determined based on a known learning sequence. One exemplary data-aided algorithm is the minimum mean square error (MMSE) estimator which minimizes the mean square error (MSE) between the received signal samples of the learning sequence and the expected samples of the learning sequence.

The header and the learning sequence allow to initialize the parts of the coherent receiver which would require otherwise a relatively long convergence time.

Fig. 5 gives a simplified overview over the various parts of a coherent receiver and indicates the number of parameters of the various parts as well as the number of symbols required to estimate the respective parameters.

Downstream of the ADCs, the chromatic dispersion (CD) compensation 20 compensates the chromatic dispersion of the two digital complex-valued signals $x_1$' and $x_2$'. The CD compensation 20 has roughly 128 to 512 complex filter coefficients.

The compensated signals $x_1$ and $x_2$ are fed to a polarization demultiplexing/equalizing filter 21 as discussed in connection with Fig. 3. This filter has roughly 20 to 40 complex filter coefficients and roughly 1000 symbols are needed for precise determination of the filter coefficients. As discussed above, the filter coefficients of the central taps of the FIR filters $h_{11}$ and $h_{12}$ may be determined based on the OOK header section 1 (which is polarized along the first polarization), whereas the filter coefficients of the central taps of the FIR filters $h_{21}$ and $h_{22}$ may be determined based on the CFE header section 2 (which is polarized along the second polarization). The equalized samples $y_1$ and $y_2$ are used for estimation of the carrier frequency offset, i.e. for carrier frequency estimation (CFE). The CFE 22 has 1 scalar parameter (that is to say the frequency offset) and roughly 500 symbols are used to precisely determine the parameter. As discussed above, this parameter may be determined by evaluating the received CFE header section 2. The phase offset is determined in the CPE 23 (carrier phase estimation). The CPE 23 has 1 scalar parameter (that is to say the phase offset) and roughly 10 symbols are needed to precisely estimate the phase offset.

Clearly, determining of the parameters of the polarization demultiplexing / equalizing filter 21 and estimation the frequency offset in the CFE 22 are two task where lots of symbols are required (roughly 100 or even more scuh as 1000 for fine adaption). Due to this reason, the invention seeks for methods allowing the direct estimation of the coefficients contained in these parts.

It should be noted that the parameters of the CD compensation 20 may be determined by using information contained in the header which can indicate the location of the transmitter. By using this information, the CD compensation filter 20 may be adjusted to compensate the dispersion accumulated from the transmitter to the receiver. The total cumulated dispersion between the transmitter and the receiver may be preferably known to the receiver and stored in memory.

In the following, it is described how to generate a PDM-QPSK signal (such as the payload 4) and an OOK signal (such as the OOK header section 1) with the same modulators in the transmitter. Thus, it is not necessary to have a separate OOK modulator in addition to a PDM-QPSK modulator.

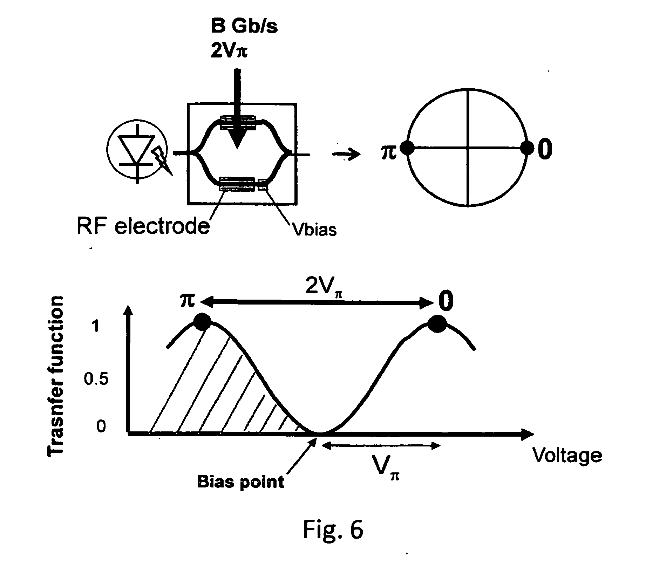

For a better understanding, a Mach-Zehnder (MZ) modulator for generating a BPSK signal is discussed in connection with Fig. 6. The upper left part of Fig. 6 shows an exemplary MZ modulator for generating a BPSK modulator signal as shown in constellation diagram in the upper right part of Fig. 6. The MZ modulator has one or two RF electrodes for introducing a phase shift between the upper and lower arm in dependency of a binary high-speed signal. The MZ modulator has further a bias-input for setting the bias point of the modulator. In dependency on the phase shift between the two arms, the optical waves in the two waves constructively or destructively interfere with each other at the output of the MZ modulator. Moreover, the phase of the output signal is modified in dependency of the phase shift.

Please note that changing the phase in the MZ modulator by $2\pi$ corresponds to changing the phase of the optical output signal of the MZ modulator by $\pi$. This is explained in the following:

In case of no phase shift between the arms, the electrical field at the output of a MZ modulator can be written as:

$$E \cdot \exp(j0) + E \cdot \exp(-j0) = E + E = 2 \cdot E \text{, where the intensity is } I = 4 \cdot E^2$$

In order to change the phase of the optical output signal by $\pi$, the phase is shifted by $+\pi$ in one arm and the phase is shifted by $-\pi$ in other arm (or the phase in only one arm is shifted by $2\pi$). In this case, the resulting electrical field is:

$$E \cdot \exp(j\pi) + E \cdot \exp(-j\pi) = -E - E = -2 \cdot E = 2E \exp(j\pi),$$

where the intensity is $I = 4 \cdot E^2$

Thus, when having a phase shift of $2\pi$ between the modulator's arms, the phase of the output signal is changed by n with the intensity being still at its maximum.

When having a phase shift of n between the modulator's arms, the intensity changes from maximum to minimum.

The lower part of Fig. 6 shows the transfer function of the MZ modulator, i.e. the intensity of the output signal in dependency of the modulator voltage.

As shown in the lower part of Fig. 6, the MZ modulator is typically biased at a point with essentially zero transmission. Thus, no light passes when no RF signal is sent to the MZ modulator. This corresponds to destructive interference of the signal of the two modulator arms (i.e. a phase difference of $\pi$ between the two arms of the MZ modulator).

By applying the modulation voltage (with a peak-to-peak swing of $2 \cdot V_\pi$ and a bitrate of B Gb/s, e.g. 28 Gb/s or 2,5 Gb/s), the modulator switches between two states with maximum transmission, i.e. two states with constructive interference where the phase difference between the two arms of the MZ modulator is e.g. 0 or $2\pi$. In the first state the optical phase of the output signal is $\pi$ (see point denoted by "$\pi$"), and in the second state, the optical phase of the output signal is 0 (see point denoted by "0"). Thus, the MZ modulator operates as a BPSK modulator. The voltage swing of $2 \cdot V_\pi$ may be realized by modulating a single electrode or two electrodes (i.e. one with $+V_\pi$ and the other with $-V_\pi$).

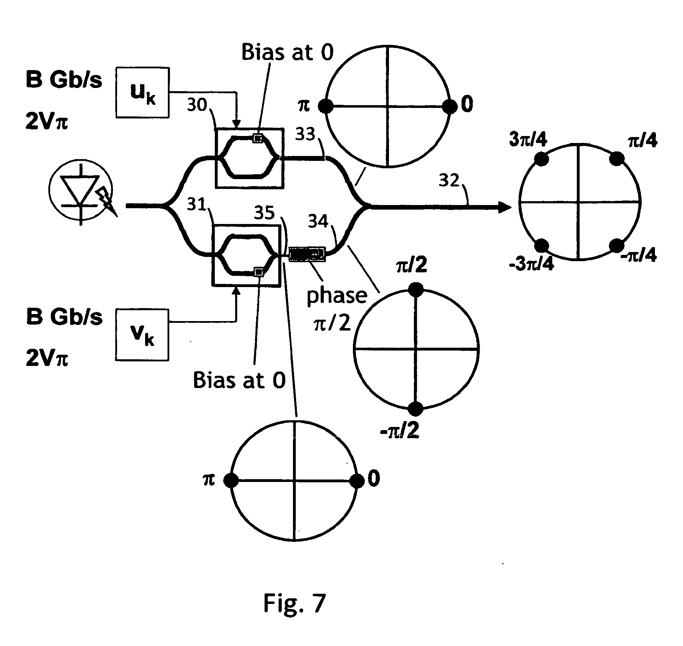

Fig. 7 illustrates conventional QPSK modulation by using two MZ modulators 30, 31 in a MZ super structure. Here, a QPSK signal 32 is generated by combining a BPSK signal 33 (having phase states of 0 or n) with another BPSK signal shifted in phase by $\pi/2$ such that the resulting phase states of the other BPSK signal 34 are $\pi/2$ and $-n/2$. In the QPSK modulator, an optical carrier wave is split and fed into an upper modulator arm having the first MZ modulator 30 and into a second modulator arm having the second MZ modulator 31. The first MZ modulator 30 receives a binary RF signal $u_k$ having a bitrate of B Gb/s and peak-to-peak voltage of $2 \cdot V_\pi$. The first MZ modulator 30 is biased at essentially zero transmission (see "Bias at 0" in Fig. 7); this corresponds to destructive interference, where the phase difference between the two arms of the modulator 30 is $\pi$.

The second MZ modulator receives a binary RF signal $v_k$ having a bitrate of B Gb/s and peak-to-peak voltage of $2 \cdot V_\pi$. Also, the second MZ modulator 31 is biased at essentially zero transmission (see "Bias at 0" in Fig. 7). As indicated in Fig. 7, the output signals 33, 35 of both MZ modulators 30, 31 are BPSK signals having an output phase of 0 or $\pi$. For generating a QPSK signal, the phase of the lower output signal 35 is shifted by $\Delta\varphi = \pi/2$ (see "phase $\pi/2$" in Fig. 7) such that the output signal of the lower arm has two phase states ($+\pi/2$ and $-\pi/2$) which are orthogonal to the phase states of the upper arm. Thus, an additional phase shift $\Delta\varphi$ of $\pi/2$ within the QPSK modulator is performed to shift the BPSK constellation of the lower MZ modulator 31 by $\pi/2$. When combining the signals 33, 35 of both arms (by adding the amplitudes), the resulting QPSK signal 32 has four different phase states ($\pi/4$, $3n/4$, $-3\pi/4$ and $-\pi/4$).

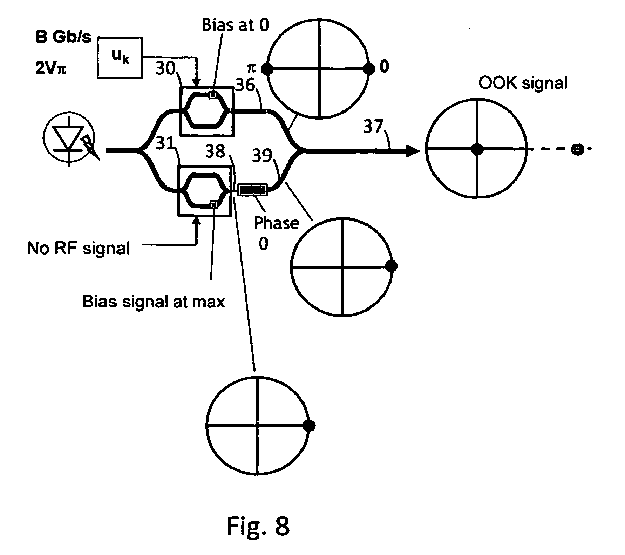

Fig. 8 shows OOK modulation by using the QPSK modulator of Fig. 7. In Fig. 8, the upper arm having the first modulator 30 is operated in a similar way as in Fig. 7 and generates a BPSK signal 36. Since the bitrate of the OOK modulated signal 37 is preferably lower than the symbol rate of the QPSK signal 32 in Fig. 7, the bitrate of the binary RF signal $u_k$ for modulating the MZ modulator 30 in Fig. 8 is preferably lower than the bitrate of the binary RF signal $u_k$ in Fig. 7.

The second MZ modulator 31 in the lower arm is configured to output a constant signal 38. Therefore, no RF signal is fed to the second MZ modulator 31. Moreover, the second MZ modulator 31 is biased at maximum transmission, i.e. in Fig. 6 at one of the points with maximum transmission where the output phase is either n or O. Thus, the bias of the second modulator 31 was changed by $\pi$ (i.e. from minimum transfer to maximum transfer). Within an MZ modulator, the status changes from destructive interference (no light or minimum light pass) to constructive interference (maximum transmission) when the phase is changed by $\pi$ within an arm of the MZ modulator (or $+\pi/2$ in one arm of the MZ modulator and $-\pi/2$ in the other arm).

In the following it is assumed that the second MZ modulator 31 is biased such that the output phase of the signal 38 is O. In contrast to Fig. 7, the phase of the signal 38 in the lower arm is not modified by an additional phase shift of $\pi/2$ since it is intended to combine the BPSK signal 36 of the upper arm with the signal 39 of the lower arm having the same amplitude as the signal in the upper arm but having a phase of 0. Thus, the additional phase shift $\Delta\omega$ between the upper and lower arms is set 0. When combining the signals 36, 39 of both arms, the resulting signal is OOK modulated two states: one state with essentially zero amplitude, and one state with double amplitude in comparison to the BPSK signal 36 (since -1+1= 0 and +1+1= 2).

Thus, the bias of the lower MZ modulator 31 is changed by $\pi$ (in comparison to the upper modulator 30) on top of a change of $\pi/2$ of the QPSK bias (see "phase 0"). The RF driver for the MZ lower modulator 31 does not provide an RF signal. This RF driver is off.

Instead of setting the phase the additional phase shift $\Delta\varphi$ between the modulator arms of the QPSK modulator to 0, one may also set the additional phase shift $\Delta\varphi$ to any of $n \cdot \pi$, or $-n \cdot \pi$, with n being a natural number.

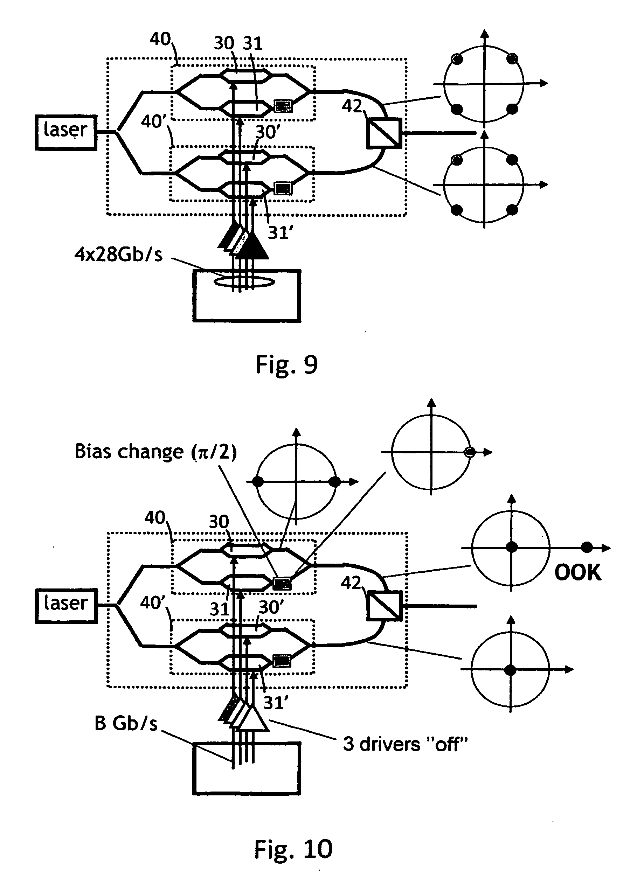

Fig. 9 illustrates the generation of a PDM-QPSK modulated signal (such as the payload section 4 of the burst in Fig. 1) having two QPSK modulated signals in two orthogonal polarizations. Here, two QPSK modulators 40 and 40' are driven by the same laser source. Each QPSK modulator 40, 40' comprises two MZ-modulators 30, 31, 30', 31' and is operated as discussed in connection with Fig. 7. The two QPSK output signals of the two QPSK modulators 40, 40' are multiplexed in the polarization domain by a polarization beam combiner (PBC) 42. Each MZ modulator 30, 31, 30', 31' is driven by a high-speed driver feeding a binary high-speed signal (e.g. a 28 Gb/s signal) to the respective MZ modulator 30, 31, 30', 31'. In case of using a bitrate of 28 Gb/s per MZ modulator, the resulting PDM-QPSK signal has a bitrate of $4 \cdot 28$ Gb/s = 112 Gb/s.

For generating an OOK modulated signal with the same transmitter, the upper QPSK modulator 40 of the PDM-QPSK modulator of Fig. 9 is configured as discussed already in connection with Fig. 8. Fig. 10 shows an embodiment for configuring the transmitter to generate an OOK modulated signal (such as the header section 1 in Fig. 1). In Fig. 10, the upper QPSK modulator 40 corresponds to the QPSK modulator in Fig. 8. Therefore, only the upper MZ modulator 30 in the upper QPSK modulator 40 receives an RF signal from a corresponding driver. The other three high-speed drivers for driving the MZ modulator 31 in the upper QPSK modulator 40 and for driving the two MZ modulators 30', 31' in the lower QPSK modulator 40' are not providing a high-speed signal for OOK operation, e.g. the drivers are switched off. In case of OOK modulation, the bitrate of the active driver may be lower than in Fig. 9 (e.g. 2.5 Gb/s compared to 28 Gb/s). As already discussed in connection with Fig. 8, the additional phase shift $\Delta\varphi$ in the upper QPSK modulator 40 is changed by $\pi/2$, e.g. the additional phase shift $\Delta\varphi$ in the upper QPSK modulator 40 is set 0, instead of $\pi/2$ in the lower QPSK modulator 40'. In other words, the bias of the phase shifter following the MZ modulator 31 is changed by $\pi/2$. Moreover, as discussed in detail in connection with Fig, 8, the bias of the MZ modulator 31 is changed by $\pi$ to maximum transmission. The other MZ modulators 30, 30', 31' are biased at minimum transmission. Since the driver for the lower QPSK modulator 40' are inactive and the MZ modulators 30', 31' are biased at minimum transmission, the lower QPSK modulator 40' outputs essentially no light (or a very low intensity of light in comparison to the upper QPSK modulator 40). Therefore, when combining the OOK modulated output of the upper QPSK modulator 40 and the essentially inactive output of the lower modulator 40', the resulting optical signal has in one polarization an OOK modulated signal and no power in the other polarization.

In summary, in Fig. 10 the MZ modulator 30 of the upper QPSK modulator 40 is biased at minimum transmission and is modulated by an RF signal. The other MZ 31 modulator of the upper QPSK modulator 40 is biased at maximum transmission and is not modulated by an RF signal. The upper QPSK modulator 40 is adjusted in such a way that the additional phase shift $\Delta\varphi$ between the two arms corresponds to any of 0, $n\cdot\pi$, or $-n\cdot\pi$, with n being a natural number. The second QPSK modulator does not output light (or a very low intensity of light in comparison to the upper QPSK modulator 40).

A further aspect of the invention relates to the power control of the LO signal at the burst mode coherent receiver. In a burst switched network, the power of each received packet can be very different (typically as much as 10dB). This is due to the fact that each packet may travel via a different path in the network. These power fluctuations will introduce large fluctuations of the signal at the coherent receiver (if the intensity varies by a factor of 10, the amplitude changes by a factor of roughly 3). If the signal amplitude is too low at the input of an ADC, the digitalization is poor and the performance is degraded. To overcome this problem, it is proposed to add an optical amplifier, in particular a semiconductor optical amplifier (SOA) at the LO output to adjust the LO power so that the product of the LO amplitude times the amplitude of the received optical signal is almost constant. This allows that the ADCs always work in the right part of their dynamic range to keep their full resolution. The optical amplifier can be controlled by a specific photodiode which tracks the optical packet power, but can also be directly controlled by the low speed photodiode which reads the OOK header. Alternatively, the optical amplifier may be controlled by the ADCs.

Fig. 11 shows an embodiment for controlling an optical amplifier 50 downstream of the local oscillator 51 by a control signal 52 derived from the ADCs 15. The received optical signal 10 is mixed with an LO signal in a coherent mixer unit 53 as discussed already in connection with Fig. 2. The coherent mixer unit may be realized by the PBS 11, the mixers 12, 13 and the photodiodes 14 of Fig. 2. The four electrical signals are fed to ADCs 15. Instead of using a dedicated receiver path for the OOK header, the ADCs 15 can be also used to read the OOK header and to send a feedback control signal 52 to the optical amplifier 50 based thereon. Such a feedback control signal 52 may be generated by summing the detected signals at the outputs of the different ADCs 15. Such a sum signal does not detect phase, amplitude and polarization but only the module of the amplitude, i.e. the information carried within the intensity of the OOK header and the power of the optical packet. This approach reduces the number of components of the coherent receiver in comparison to an approach with a dedicated photodiode which reads the OOK header. The OOK header signal 54 as detected by the ADCs 15 may be directly used in the receiver without having to wait for the DSP 16 to recover the OOK header.

Fig. 12 shows an alternative approach for controlling the optical amplifier 50. Here, a photodiode 55 for reading the OOK header. Based on the electrical output signal of the photodiode 55, a control signal 52 for controlling the optical amplifier 50 is generated. The OOK header signal 54 as detected by the extra photodiode 55 may be directly used in the receiver without having to wait for the DSP 16 to recover the OOK header.

As discussed above, instead of using a photodiode 55 intended for reading the OOK header, a specific photodiode for tracking the power of the optical packets may be used.

It should be noted that an extra photodiode intended for detecting the header may be used in the receiver even if it is not used for generating a control signal 52.

Fig. 13 shows an alternative embodiment of the digital part of the coherent burst mode receiver. Similar to the embodiment in Fig. 5, the embodiment in Fig. 13 may have a PD compensation 20. Moreover, polarization demultiplexing and equalization 21, CFE 22 and CPE 23 is performed. In dependency whether the evaluated signals $x_1$, $x_2$ correspond either to a header, to a learning sequence or to payload data, different algorithms for determining filter coefficients may be selected (see switch 61 controlled by the decision in block 60). One algorithm for determining coefficients may be the CMA 62, a second algorithm may be the algorithm 63 based on [Kikuchi2006] which allows to estimate the polarization of a single-polarization header signal and to thereby determine the central tap coefficients as discussed above. A third algorithm 64 may be a data-aided algorithm for filter estimation based on the received learning sequence, such as an MMSE algorithm which minimizes the mean square error (MSE).

The CMA 62 evaluates the signals downstream of the polarization demultiplexer / equalizer 21, in particular the signals $y_1$, $y_2$ at its output, and seeks to minimize the deviation of these signals from a circle with constant amplitude around the origin of the complex plane. The constant modulus error may be written as $(|y_i|^2 - A^2)^2$, where $A^2$ may be e.g. 1 and i = 1, 2.

The MMSE algorithm 64 compares the signals $c_1$, $c_2$ with the sequences $s_1$, $s_2$ and tries to minimize the MSE. The MSE corresponds to $|c_i - s_i|^2$, with i = 1, 2. The MSE criterion is used to compute the filter coefficients when a known learning sequence is received.

The receiver in Fig. 13 allows to switch between "blind" CMA and "data-driven" MMSE.

It is also possible to use a semi-blind CMA (SB-CMA) where both CMA and MMSE are combined. The SB-CMA is disclosed in "Semi-blind Constant modulus equalization with optimal step size", Vicente Zarzoso et al., ICASSP 2005. The block 65 ("Force Orthogonality") is used to determine filter coefficients for the recovery of the second polarization based on the filter coefficients for the first polarization and an assumed orthogonality between both polarizations as already discussed above. In case only the central tap coefficients for the first polarization are known, only the central tap coefficients for the second polarization are determined based on the central tap coefficients of the first polarization.

The CFE 22 and the CPE 22 are preferably configurable for differently modulated signals, e.g. for a constant optical signal such as header section 2 in Fig. 1, a DBPSK modulated signal used in the header, and a PDM-QPSK signal used for the learning sequence and the payload. For configuring the CFE 22 and the CPE 22, a parameter M may be set by block 66. M is the parameter used as an exponent in the Mth-power operation in the equations for CFE. For a constant signal (continuous wave - CW) M may be set to 1, for a DBPSK modulated signal M may be set to 2 and for a QPSK or PDM-QPSK modulated signal M may be set to 4.

In the following exemplary equations for the CFE 22 are discussed, which make use of a parameter M. These equations are identical to the above equations for CFE in case of M = 1.

The electrical signal $s_k$ (e.g. $y_1$) at the input of the carrier frequency estimation block for one of the two polarizations can be written

$$s_k = A_k \cdot \exp\left[ j[\phi_k + (\omega_s - \omega_{LO})t_k + \phi_{N,k}]\right]$$

Here, $A_k$ is the amplitude of the signal; however, there may be some noise in the amplitude. The term $\phi_k$ relates to the phase. The term $\omega_s$ corresponds to the angular frequency of the optical carrier wave, $\omega_{LO}$ corresponds to the angular frequency of the local oscillator, $t_k$ corresponds to the time at the k-th symbol, and $\phi_{N,k}$ corresponds to the phase due to noise.

Multiplying $s_k$ and the delayed complex conjugate $s_{k-1}^{\bullet}$ thereof (delayed by a $z^{-1}$ block) results in:

$$s_k \cdot s_{k-1}^{\bullet} = A_k A_{k-1} \exp\left[ j[(\phi_k - \phi_{k-1}) + (\omega_s - \omega_{LO})T + (\phi_{N,k} - \phi_{N,k-1})]\right]$$

Then the M-th power is computed (e.g. M = 4 in case of QPSK modulation):

$$(s_k \cdot s_{k-1}^{\bullet})^M = \left(A_k A_{k-1}\right)^M \exp\left[ j[\underbrace{M(\phi_k - \phi_{k-1})}_{=0+2k\pi} + M(\omega_s - \omega_{LO})T + M(\phi_{N,k} - \phi_{N,k-1})]\right]$$

$$= \left(A_k A_{k-1}\right)^M \exp\left[ j[M(\omega_s - \omega_{LO})T + M(\phi_{N,k} - \phi_{N,k-1})]\right]$$

where T = $t_k - t_{k-1}$ is the symbol period.

In case of M = 1, this power-operation is not necessary.

Averaging this quantity over N symbols results in:

$$\sum_N \left(s_k \cdot s_{k-1}^{\cdot}\right)^M = \exp[M \cdot j(\omega_s - \omega_{LO})T]\sum_N \left(A_k A_{k-1}\right)^M \exp\left[j[M(\phi_{N,k} - \phi_{N,k-1})]\right] = F_n$$

Here, the term containing $(\omega_s - \omega_{LO})$ has been sorted out from the sum since it does not depend on k. By determining the argument $\alpha_n = \angle F_n$ and dividing the argument by M·T, one can extract the offset $\Delta\omega = (\omega_s - \omega_{LO})$. The phase noise has a zero average and is canceled by the sum.

In summary, the above algorithm is based on multiplying a sample and delayed complex conjugate thereof (or multiplying the delayed sample and the complex conjugate of the sample), computing the $M^{th}$ power thereof, averaging over N symbols and determining the frequency offset based on the argument of the averaged term. This algorithm is also called Viterbi and Viterbi algorithm.

Also, the CPE 23 can be similarly implemented. For determining the phase offset, the $M^{th}$ power of a sample is determined, the result is averaged over N symbols and the argument of the averaged term is determined.

The following table lists the setting of the coherent burst mode receiver in Fig. 13 in dependency of the actual packet section and its modulation. Moreover, the respective value of the parameter M used as an exponent in the $M^{th}$ power operation for CFE is indicated.

| Section of optical packet | Modulation format | FIR filters for $1^{st}$ pol. ($h_{11}$, $h_{12}$) | FIR filters for $2^{nd}$ pol. ($h_{21}$, $h_{22}$) | CFE |
|---|---|---|---|---|
| header | OOK | algorithm based on [Kikuchi2006] | force orth. | NO |
| header | DBPSK | algorithm based on [Kikuchi2006] or CMA | force orth. | M=2 |
| header | QPSK | algorithm based on [Kikuchi2006] or CMA | force orth. | M=4 |
| header | CW | algorithm based on [Kikuchi2006] or CMA or MMSE (with $s_1 \equiv 1$) | force orth. | M=1 |
| learning sequence | PDM-QPSK | MMSE | MSE | M=4 |
| payload | PDM-QPSK | CMA | CMA | M=4 |

When receiving an OOK modulated header in the first polarization (such as the header section 1 in Fig. 1), the central tap coefficients of the FIR filters for the first polarization (i.e. $h_{11}$, $h_{12}$) may be determined by selecting said algorithm 63 based on [Kikuchi2006]. The central tap coefficients of the FIR filters for the second polarization (i.e. $h_{22}$, $h_{21}$) may be determined by using algorithm 65 which forces orthogonality. According to the table, the OOK modulated header with binary ones and binary zeros is not used for the CFE 22 due to the off-periods where no light is received.

In case of receiving a DBPSK modulated header (instead of an OOK modulated header), the central tap coefficients of the FIR filters for the first polarization (i.e. $h_{11}$, $h_{12}$) may be determined by selecting algorithm 63 based on [Kikuchi2006]. Alternatively, the CMA 62 may be selected which allows to determine all filter coefficients of the FIR filters for the first polarization. Only the central coefficients or all coefficients of the FIR filters for the second polarization (i.e. $h_{22}$, $h_{21}$) may be determined by using algorithm 65 which forces orthogonality. The CFE 22 may be carried out based on the DBPSK modulated header in the first polarization when setting M = 2.

In case of receiving a single-polarization QPSK modulated header (instead of an OOK modulated header), the central tap coefficients of the FIR filters for the first polarization (i.e. $h_{11}$, $h_{12}$) may be determined by selecting algorithm 63 based on [Kikuchi2006]. Alternatively, the CMA 62 may be selected which allows to determine all filter coefficients of the FIR filters for the first polarization. Only the central coefficients or all coefficients of the FIR filters for the second polarization (i.e. $h_{22}$, $h_{21}$) may be determined by using algorithm 65 which forces orthogonality. The CFE 22 may be carried out based on the QPSK modulated header in the first polarization when setting M = 4.

When receiving a CW (continuous wave) header in the first polarization which is a constant signal (similar to the CFE header section 2 in the second polarization in Fig. 1), the central tap coefficients of the FIR filters for the first polarization (i.e. $h_{11}$, $h_{12}$) may be determined by using algorithm 63 based on [Kikuchi2006]. Alternatively, the CMA 62 or the MMSE 64 may be selected which allows to determine all filter coefficients of the FIR filters for the first polarization. In case of using the MMSE 64, the expected sequence in the first polarization is a constant sequence (e.g. $s_1 \equiv 1$). Only

the central coefficients or all coefficients of the FIR filters for the second polarization (i.e. $h_{22}$, $h_{21}$) may be determined by using algorithm 65 which forces orthogonality. The CFE 22 may be carried out based on the constant header in the first polarization when setting M = 1.

In case of receiving a PDM-QPSK modulated known learning sequence (such as the learning sequence 3 in Fig. 1), the MMSE 64 is preferably selected for determining the filter coefficients of the FIR filters for both polarizations. The MMSE 64 may be initialized with the filter coefficients determined before (e.g. by algorithm 63). The CFE 22 may be carried out for both polarizations based on the PDM-QPSK modulated header when setting M = 4.

When receiving the payload (such as the payload section 4 in Fig. 1), the CMA 62 may be selected which allows to determine all filter coefficients of the FIR filters for the both polarizations. The CMA 62 may be initialized with the filter coefficients determined before (e.g. by the MMSE 64 or algorithm 63). The CFE 22 may be carried out for both polarizations based on the payload when setting M = 4.

## Claims

1. A modulation method for generating optical bursts, an optical burst comprising a first header section (1) and a payload section (4), wherein the method comprises

    - generating the first header section (1) as a single-polarization signal in a first polarization, and
    - generating the payload section (4) as a dual-polarization signal having a signal in the first polarization and a signal in a second polarization.

2. The modulation method of claim 1, wherein

    - the signals of the payload section (4) are PSK modulated signals, and
    - the first header section (1) is an OOK modulated signal or a DBPSK modulated signal.

3. The modulation method of claim 1, wherein

    - a second header section (2) of the burst, with the second header section (2) being a single-polarization signals in the first or second polarization, or
    - the first header section of the burst or a portion of the first header section

    is a constant optical signal.

4. The modulation method of claim 1, wherein the burst comprises a second header section (2), with

    - the second header section (2) being a single-polarization signal in the second polarization.

5. The modulation method of claim 1, wherein the burst comprises a learning sequence (3) being a dual-polarization signal.

6. An optical transmitter configured to generate optical bursts, an optical burst comprising a first header section (1) and a payload section (4), wherein the optical transmitter comprises means for

    - generating the first header section (1) as a single-polarization signal in a first polarization, and
    - generating the payload section (4) as a dual-polarization signal having a signal in the first polarization and a signal in a second polarization.

7. The transmitter of claim 6, wherein

    - the first header section (1) is an OOK modulated signal, and
    - the signals of the payload section (4) are QPSK modulated signals,
    - the transmitter comprises two QPSK modulators (40, 40') for generating the payload section (4), the first QPSK modulator (40) associated with the first polarization and the second QPSK modulator (40') associated with the second polarization, each QPSK modulator (40,40') comprising

        - separating means for separating an optical carrier wave and feeding the wave into a first and in a second modulator arm,
- the first modulator arm having a first Mach-Zehnder modulator (30, 30'),
- the second modulator arm having a second Mach-Zehnder modulator (31, 31'),
- phase shift means for introducing an additional phase shift $\Delta\varphi$ between the first arm and the second arm, and
- combining means (42) for combining the signals in both modulator arms,

wherein the transmitter is further configured to generate the OOK modulated first header section, wherein when generating the first header section

- the first Mach-Zehnder modulator (30) of the first QPSK modulator (40) is configured to output a BPSK modulated signal,
- the second Mach-Zehnder modulator (31) of the first QPSK modulator (40) is configured to output a constant signal essentially having the same amplitude as the BPSK modulated signal,
- the phase shift means of the first QPSK modulator (40) are adjusted such that the additional phase shift $\Delta\varphi$ between the first and the second arms corresponds to any of 0, $n\cdot\pi$, or $-n\cdot\pi$, with n being a natural number, and
- the second QPSK modulator (40') provides essentially no light or a low level of light in comparison to the first QPSK modulator (40).

8. A coherent optical receiver configured to receive optical bursts, an optical burst comprising a first header section (1) and a payload section (4), wherein the optical receiver comprises means for receiving

- the first header section (1) being a single-polarization signal in a first polarization, and
- the payload section (4) being a dual-polarization signal having a signal in the first polarization and a signal in a second polarization, the receiver further comprising:
- a polarization demultiplexer (21),

wherein the receiver is configured to compute for adjusting the polarization demultiplexer (21) one or more parameters which are characteristic for the polarization state of the received single-polarization signal based on the received first header section (1).

9. The coherent optical receiver of claim 8, wherein

- the polarization demultiplexer (21) is implemented by a digital polarization demultiplexing filter, and
- the receiver comprises coefficients computing means for computing filter coefficients of the digital polarization demultiplexing filter (21), wherein the coefficients computing means are configured to compute based on the received first header section (1) one or more filter coefficients of the filter portion associated with the recovery of a signal in the first polarization.

10. The coherent optical receiver of claim 9, wherein

- the polarization demultiplexing filter comprises four FIR filters ($h_{11}$, $h_{21}$, $h_{12}$, $h_{22}$) in a butterfly structure, two ($h_{11}$, $h_{12}$) of the four FIR filters for recovering a signal in the first polarization and the two other ($h_{21}$, $h_{22}$) of the four FIR filters for recovering a signal in the second polarization, and
- the coefficients computing means are configured to compute based on the received first header section the coefficients of the central taps of the two FIR filters ($h_{11}$, $h_{12}$) which are for recovering a signal in the first polarization.

11. The coherent optical receiver of claim 10, wherein the coefficients computing means are configured to perform a constant-modulus algorithm or a data-aided algorithm, with the algorithm being initialized with the computed coefficients of the central taps.

12. The coherent optical receiver of claim 10, wherein

- the coefficient $h_{11}$ of a central tap of the FIR filter ($h_{11}$) connecting a first input of the polarization demultiplexing filter to a first output of the polarization demultiplexing filter, the first output associated with the first polarization, and
- the coefficient $h_{12}$ of a central tap of the FIR filter ($h_{12}$) connecting a second input of the polarization demultiplexing filter to the first output of the polarization demultiplexing filter are determined according to the following formulas:

$$h_{11} = \sqrt{\alpha} \cdot e^{-j\delta}$$

$$h_{12} = \sqrt{1 - \alpha}$$

$$\text{with} \begin{cases} \alpha = \dfrac{|\bar{r}|}{|\bar{r}| - 1} \quad , \quad \delta = \arg(\bar{r}) \quad , \quad \bar{r} = average\left(\dfrac{x_1(k)}{x_2(k)}\right) \quad or \\ \\ \alpha = \dfrac{1}{|\bar{r}| + 1} \quad , \quad \delta = -\arg(\bar{r}) \quad , \quad \bar{r} = average\left(\dfrac{x_2(k)}{x_1(k)}\right) \end{cases}$$

where
- $x_1(k)$ denotes a sample at time instance k at the first input of the polarization demultiplexing filter or upstream thereof,
- $x_2(k)$ denotes a sample at time instance k at the second input of the polarization demultiplexing filter or upstream thereof, and
- average() denotes the average over a plurality of time instances k.

13. The coherent optical receiver of claim 8, wherein

- the burst comprises a second header section (2) in addition to the first header section (1), with the second header section being a single-polarization signal in the second polarization, and
- the receiver is configured to compute one or more parameters characteristic for the polarization state of the received single-polarization signal of the second header section (2) based on the received second header section (2) in order to adjust the polarization demultiplexer.

14. The coherent optical receiver of claim 8, wherein

- the polarization demultiplexer (21) is implemented by a polarization demultiplexing filter, and
- the receiver comprises coefficients computing means for computing filter coefficients of the polarization demultiplexing filter (21), the coefficients computing means are configured to compute one or more filter coefficients of the filter portion ($h_{21}$, $h_{22}$) associated with the recovery of a signal in the second polarization based the one or more parameters characteristic for the polarization state of the received single-polarization signal in the first polarization.

15. The coherent optical receiver of claim 9, wherein the burst comprises a learning sequence (3) being a dual-polarization signal, wherein the coefficients computing means are configured to compute filter coefficients of the polarization demultiplexing filter or of an equalizer filter based on the received learning sequence (3).

16. The coherent optical receiver of claim 8, wherein

- a second header section (2) of the burst, with the second header section being a single-polarization signal in the first or second polarization, or
- the first header section of the burst or a portion of the first header section

is a constant optical signal, and
wherein

- the receiver comprises carrier frequency offset estimation means (22), the carrier frequency offset estimation means (22) configured to perform carrier frequency offset estimation based on an electrical signal ($y_1$, $y_2$) derived from the constant optical signal.

17. The coherent receiver of claim 8, wherein the receiver comprises a controllable optical amplifier (50) to adjust the power of the local oscillator signal.

18. The coherent receiver of claim 17, wherein the optical amplifier (50) is controlled in such a way that the amplitude of the amplified local oscillator signal times the amplitude of the signal is essentially constant, wherein the optical amplifier(50) is controlled in dependency of

- a signal downstream of a photodiode used for tracking the power of the optical bursts,
- a signal (52) downstream of a separate photodiode (55) used for reading the first header portion, or
- a signal (52) generated by combining the signals from a plurality of analog-to-digital converters (15) in the receiver path.

19. The coherent receiver of claim 8, wherein the receiver further comprises:

- chromatic dispersion compensation means (20); and
- means for determining parameters of the chromatic dispersion compensation means (20), the means for determining parameters configured to determine the parameters by using information contained in the first header section (1) or in a different header section which indicates the transmitter and/or the optical transmission path.

20. The coherent receiver of claim 8,

- the polarization demultiplexer (21) is implemented by a polarization demultiplexing filter,
- the receiver comprises coefficients computing means for computing filter coefficients of the polarization demultiplexing filter (21), wherein the coefficients computing means are configured to select an algorithm from a plurality of algorithms, and
- the receiver comprises carrier frequency offset estimation means (22) which are configurable in dependency of a parameter M, wherein the carrier frequency offset estimation means are configured to perform an $M^{th}$ power operation.

**Patentansprüche**

1. Modulationsverfahren zum Erzeugen von optischen Bursts, wobei ein optischer Burst einen ersten Header-Abschnitt (1) und einen Nutzdatenabschnitt (4) umfasst, wobei das Verfahren umfasst:

- Erzeugen des ersten Header-Abschnitts (1) als ein unipolares Signal in einer ersten Polarisation, und
- Erzeugen des Nutzdatenabschnitts (4) als ein bipolares Signal mit einem Signal in der ersten Polarisation und einem Signal in einer zweiten Polarisation.

2. Modulationsverfahren nach Anspruch 1, wobei

- die Signale des Nutzdatenabschnitts (4) PSK-modulierte Signale sind, und
- der erste Header-Abschnitt (1) ein OOK-moduliertes Signal oder ein DBPSK-moduliertes Signal ist.

3. Modulationsverfahren nach Anspruch 1, wobei

- ein zweiter Header-Abschnitt (2) des Bursts, welcher ein unipolares Signal in der ersten oder in der zweiten Polarisation ist, oder
- der erste Header-Abschnitt des Bursts oder ein Teil des ersten Header-Abschnitts ein konstantes optisches Signal ist.

4. Modulationsverfahren nach Anspruch 1, wobei der Burst einen zweiten Header-Abschnitt (2) umfasst, wobei

- der zweite Header-Abschnitt (2) ein unipolares Signal in der zweiten Polarisation ist.

**5.** Modulationsverfahren nach Anspruch 1, wobei der Burst eine Lernsequenz (3) umfasst, welche ein bipolares Signal ist.

**6.** Optischer Sender, konfiguriert für die Erzeugung von optischen Bursts, wobei ein optischer Burst einen ersten Header-Abschnitt (1) und einen Nutzdatenabschnitt (4) umfasst, wobei der optische Sender Mittel zum Durchführen der folgenden Schritte umfasst,

- Erzeugen des ersten Header-Abschnitts (1) als ein unipolares Signal in einer ersten Polarisation, und
- Erzeugen des Nutzdatenabschnitts (4) als ein bipolare Signal mit einem Signal in der ersten Polarisation und einem Signal in einer zweiten Polarisation.

**7.** Optischer Sender nach Anspruch 6, wobei

- der erste Header-Abschnitt (1) ein OOK-moduliertes Signal ist, und
- die Signale des Nutzdaten-Abschnitts (4) QPSK-modulierte Signale sind,
- der Sender zwei QPSK-Modulatoren (40, 40') zum Erzeugen des Nutzdatenabschnitts (4) umfasst, wobei der erste QPSK-Modulator (40) mit der ersten Polarisation assoziiert ist und der zweite QPSK-Modulator (40') mit der zweiten Polarisation assoziiert ist, wobei jeder QPSK-Modulator (40, 40') umfasst:

- Trennmittel zum Trennen einer optischen Trägerwelle und Einspeisen der Welle in einen ersten und in einen zweiten Modulator-Arm,
- wobei der erste Modulator-Arm einen ersten Mach-Zehnder-Modulator (30, 30') aufweist,
- wobei der zweite Modulator-Arm einen zweiten mach-Zehnder-Modulator (31, 31') aufweist,
- Phasenverschiebungsmittel zum Einführen einer einer zusätzlichen Phasenverschiebung $\Delta\varphi$ zwischen dem ersten Arm und dem zweiten Arm, und
- Kombinationsmittel (42) zum Kombinieren der Signale in beiden Modulator-Armen,

wobei der Sender weiterhin für das Erzeugen des ersten OOK-modulierten Header-Abschnitts konfiguriert ist, wobei bei der Erzeugung des ersten Header-Abschnitts

- der erste Mach-Zehnder-Modulator (30) des ersten QPSK-Modulators (40) für die Ausgabe eines BPSK-modulierten Signals konfiguriert ist,
- der zweite Mach-Zehnder-Modulator (31) des ersten PSK-modulators (40) für die Ausgabe eines konstanten Signals mit im Wesentlichen derselben Amplitude wie das BPSK-modulierte Signal konfiguriert ist,
- die Phasenverschiebungsmittel des ersten QPSK-Modulators (40) derart angepasst werden, dass die zusätzliche Phasenverschiebung $\Delta\varphi$ zwischen dem ersten und dem zweiten Arm entweder 0, $n\Box\pi$ oder $-n\Box\pi$ entspricht, wobei n eine natürliche Zahl ist, und
- der zweite QPSK-Modulator (40') im Wesentlichen kein Licht oder einen niedrigen Lichtpegel im Vergleich zu dem ersten QPSK-Modulator (40) bereitstellt.

**8.** Kohärenter optischer Empfänger, konfiguriert für den Empfang von optischen Bursts, wobei ein optischer Burst einen ersten Header-Abschnitt (1) und einen Nutzdatenabschnitt (4) umfasst, wobei der optische Empfänger Mittel zum Empfangen

- des ersten Header-Abschnitts (1), welcher ein unipolares Signal in einer ersten Polarisation ist, und
- des Nutzdatenabschnitts (4), welcher ein bipolares Signal mit einem Signal in der ersten Polarisation und einem Signal in einer zweiten Polarisation ist.

umfasst,
wobei der Empfänger weiterhin umfasst:

- Einen Polarisations-Demultiplexer (21),

wobei der Empfänger dafür konfiguriert ist, für die Anpassung des Polarisations-Demultiplexer (21) einen oder mehrere Parameter, welche für den Polarisationszustand des empfangenen unipolaren Signals kennzeichnend sind, auf der Basis des empfangenen ersten Header-Abschnitts (1) zu berechnen.

**9.** Kohärenter optischer Empfänger nach Anspruch 8, wobei

- der Polarisations-Demultiplexer (21) von einem digitalen Polarisations-Demultiplexer-Filter implementiert wird, und
- der Empfänger Koeffizientenberechnungsmittel zum Berechnen von Filterkoeffizienten des digitalen Polarisations-Demultiplexer-Filters (21) umfasst, wobei die Koeffizientenberechnungsmittel für die Berechnung eines oder mehrerer Filterkoeffizienten des mit der Rückgewinnung eines Signals in der ersten Polarisation assoziierten Filterteils auf der Basis des empfangenen ersten Header-Abschnitts (1) konfiguriert sind.

10. Kohärenter optischer Empfänger nach Anspruch 9, wobei

- der Polarisations-Demultiplexer-Filter vier FIR-Filter ($h_{11}$, $h_{21}$, $h_{12}$, $h_{22}$) in einer Schmetterlingsstruktur umfasst, wobei zwei ($h_{11}$, $h_{12}$) der vier FIR-Filter für die Rückgewinnung eines Signals in der ersten Polarisation und die zwei anderen ($h_{21}$, $h_{22}$) der vier FIR-Filter für die Rückgewinnung eines Signals in der zweiten Polarisation bestimmt sind, und
- die Koeffizientenberechnungsmittel für die Berechnung der Koeffizienten der Mittelabgriffe der zwei FIR-Filter ($h_{11}$, $h_{12}$), welche für die Rückgewinnung eines Signals in der ersten Polarisation bestimmt sind, auf der Basis des empfangenen ersten Header-Abschnitts konfiguriert sind.

11. Kohärenter optischer Empfänger nach Anspruch 10, wobei die Koeffizientenberechnungsmittel für das Ausführen eines Constant-Modulus-Algorithmus oder eines Data-Aided-Algorithmus konfiguriert sind, wobei der Algorithmus mit den berechneten Koeffizienten der Mittelabgriffe initialisiert wird.

12. Kohärenter optischer Empfänger nach Anspruch 10, wobei

- der Koeffizient $h_{11}$ eines Mittelabgriffs des FIR-Filters ($h_{11}$), welcher einen ersten Eingang des Polarisations-Demultiplexer-Filters mit einem ersten Ausgang des Polarisations-Demultiplexer-Filters verbindet, wobei der erste Ausgang mit der ersten Polarisation assoziiert ist, und
- der Koeffizient $h_{12}$ eines Mittelabgrifis des FIR-Filters ($h_{12}$), welher einen zweiten Eingang des Polarisations-Demultiplexer-Filters mit dem ersten Ausgang des Polarisations-Demultiplexer-Filters verbindet,

gemäß den folgenden Formeln bestimmt werden:

$$h_{11} = \sqrt{\alpha} \cdot e^{-j\delta}$$

$$h_{12} = \sqrt{1-\alpha}$$

$$\text{with} \begin{cases} \alpha = \dfrac{|\overline{r}|}{|\overline{r}|-1} \quad , \quad \delta = \arg(\overline{r}) \quad , \quad \overline{r} = average\left(\dfrac{x_1(k)}{x_2(k)}\right) \quad or \\[4mm] \alpha = \dfrac{1}{|\overline{r}|+1} \quad , \quad \delta = -\arg(\overline{r}) \quad , \quad \overline{r} = average\left(\dfrac{x_2(k)}{x_1(k)}\right) \end{cases}$$

wobei

- $x_1(k)$ einen Abtastwert zum Zeitpunkt k an dem ersten Eingang des Polarisations-Demultiplexer-Filters oder stromaufwärts von diesem bezeichnet,
- $x_2(k)$ einen Abtastwert zum Zeitpunkt k an dem zweiten Eingang des Polarisations-Demultiplexer-Filters oder stromaufwärts von diesem bezeichnet, und

- average () den Mittelwert über eine Vielzahl von Zeitpunkten k bezeichnet.

13. Kohärenter optischer Empfänger nach Anspruch 8, wobei

   - der Burst einen zweiten Header-Abschnitt (2) zusätzlich zu dem ersten Header-Abschnitt (1) umfasst, wobei der zweite Header-Abschnitt ein unipolares Signal in der zweiten Polarisation ist, und
   - der Empfänger dafür konfiguriert ist, eine oder mehrere Parametereigenschaften für den Polarisationszustand des empfangenen unipolaren Signals des zweiten Header-Abschnitts (2) auf der Basis des empfangenen zweiten Header-Abschnitts (2) zu berechnen, um den Polarisations-Demultiplexer anzupassen.

14. Kohärenter optischer Empfänger nach Anspruch 8, wobei

   - der Polarisations-Demultiplexer (21) von einem Polarisations-Demultiplexer-Filter implementiert wird, und
   - der Empfänger Koeffizientenberechnungsmittel zum Berechnen der Filterkoeffizienten des Polarisations-Demultiplexer-Filters (21) umfasst, wobei die Koeffizientenberechnungsmittel für das Berechnen eines oder mehrerer Filterkoeffizienten des mit der Rückgewinnung eines Signals in der zweiten Polarisation assoziierten Filterteils ($h_{21}$, $h_{22}$) auf der Basis der einen oder mehreren Parametereigenschaften für den Polarisationszustand des empfangenen unipolaren Signals in der ersten Polarisation konfiguriert ist.

15. Kohärenter optischer Empfänger nach Anspruch 9, wobei der Burst eine Lernsequenz (3), welche ein bipolares Signal ist, umfasst, wobei die Koeffizientenberechnungsmittel für das Berechnen der Filterkoeffizienten des Polarisations-Demultiplexer-Filters oder eines Entzerrer-Filters auf der Basis der empfangenen Lernsequenz (3) konfiguriert sind.

16. Kohärenter optischer Empfänger nach Anspruch 8, wobei

   - ein zweiter Header-Abschnitt (2) des Bursts, wobei der zweite Header-Abschnitt ein unipolares Signal in der ersten oder zweiten Polarisation ist, oder
   - der erste Header-Abschnitt des Bursts oder ein Teil des ersten Header-Abschnitts ein konstantes optisches Signal ist, und

   wobei

   - der Empfänger Trägerfrequenzversatz-Schätzungsmittel (22) umfasst, wobei die Trägerfrequenzversatz-Schätzungsmittel (22) für das Durchführen einer Trägerfrequenzversatz-Schätzung auf der Basis eines von dem konstanten optischen Signal abgeleiteten elektrischen Signals ($y_1$, $y_2$) konfiguriert ist.

17. Kohärenter Empfänger nach Anspruch 17, wobei der Empfänger einen steuerbaren optischen Verstärker (50) für die Anpassung der Signalleistung des lokalen Oszillators umfasst.

18. Kohärenter Empfänger nach Anspruch 17, wobei der optische Verstärker (50) derart gesteuert wird, dass die Amplitude des verstärkten Signals des lokalen Oszillators mal die Amplitude des Signals im Wesentlichen konstant ist, wobei der optische Verstärker (50) in Abhängigkeit von

   - einem Signal stromabwärts einer Fotodiode, welche für die Verfolgung der Leistung der optischen Bursts verwendet wird,
   - einem Signal (52) stromabwärts einer separaten Fotodiode (55), welche für das Lesen des ersten Header-Teils verwendet wird, oder
   - einem durch das Kombinieren der Signale aus einer Vielzahl von Analog-Digital-Umsetzern (15) im Empfängerpfad erzeugten Signal (52)

   gesteuert wird.

19. Kohärenter Empfänger nach Anspruch 8, wobei der Empfänger weiterhin umfasst:

   - Mittel zur Kompensation der chromatischen Dispersion (20); und
   - Mittel zum Bestimmen der Parameter der Mittel zur Kompensation der chromatischen Dispersion (20), wobei die Mittel zum Bestimmen der Parameter dafür konfiguriert sind, die Parameter unter Verwendung der in dem ersten Header-Abschnitt (1) oder in einem anderen Header-Abschnitt, welcher den Sender und/oder den optischen Übertragungspfad angibt, enthaltenen Informationen zu bestimmen.

**20.** Kohärenter Empfänger nach Anspruch 8, wobei

- der Polarisations-Demultiplexer (21) von einem Polarisations-Demultiplexer-Filter implementiert wird,
- der Empfänger Koeffizientenberechnungsmittel zum Berechnen der Filterkoeffizienten des Polarisations-Demultiplexer-Filters (21) umfasst, wobei die Koeffizientenberechnungsmittel für das Auswählen eines Algorithmus aus einer Vielzahl von Algorithmen konfiguriert ist, und
- der Empfänger Trägerfrequenzversatz-Schätzungsmittel (22) umfasst, welche in Abhängigkeit von einem Parameter M konfigurierbar sind, wobei die Trägerfrequenzversatz-Schätzungsmittel für das Durchführen eines M-ten Leistungsbetriebs konfiguriert sind.

**Revendications**

**1.** Procédé de modulation pour générer des rafales optiques, une rafale optique comprenant une première section d'en-tête (1) et une section de charge utile (4), le procédé comprenant les étapes suivantes

- générer la première section d'en-tête (1) sous forme de signal à polarisation unique dans une première polarisation, et
- générer la section de charge utile (4) sous forme de signal à double polarisation présentant un signal dans la première polarisation et un signal dans une deuxième polarisation.

**2.** Procédé de modulation selon la revendication 1, dans lequel

- les signaux de la section de charge utile (4) sont des signaux modulés par déplacement de phase, et
- la première section d'en-tête (1) est un signal modulé par tout ou rien ou un signal modulé par déplacement de phase binaire différentielle.

**3.** Procédé de modulation selon la revendication 1, dans lequel

- une deuxième section d'en-tête (2) de la rafale, la deuxième section d'en-tête (2) étant un signal à polarisation unique dans la première ou la deuxième polarisation, ou
- la première section d'en-tête de la rafale ou une partie de la première section d'entête est un signal optique constant.

**4.** Procédé de modulation selon la revendication 1, dans lequel la rafale comprend une deuxième section d'en-tête (2),

- la deuxième section d'en-tête (2) étant un signal à polarisation unique dans la deuxième polarisation.

**5.** Procédé de modulation selon la revendication 1, dans lequel la rafale comprend une séquence d'apprentissage (3) qui est un signal à double polarisation.

**6.** Émetteur optique configuré pour générer des rafales optiques, une rafale optique comprenant une première section d'en-tête (1) et une section de charge utile (4), l'émetteur optique comprenant des moyens pour

- générer la première section d'en-tête (1) sous forme de signal à polarisation unique dans une première polarisation, et
- générer la section de charge utile (4) sous forme de signal à double polarisation présentant un signal dans la première polarisation et un signal dans une deuxième polarisation.

**7.** Émetteur selon la revendication 6, dans lequel

- la première section d'en-tête (1) est un signal modulé par tout ou rien, et
- les signaux de la section de charge utile (4) sont des signaux modulés par déplacement de phase en quadrature, et
- l'émetteur comprend deux modulateurs à déplacement de phase en quadrature (40, 40') pour générer la

EP 2 273 700 B1

section de charge utile (4), le premier modulateur à déplacement de phase en quadrature (40) étant associé à la première polarisation et le deuxième modulateur à déplacement de phase en quadrature (40') étant associé à la deuxième polarisation, chaque modulateur à déplacement de phase en quadrature (40, 40') comprenant

- des moyens de séparation pour séparer une onde porteuse optique et délivrer l'onde à un premier et à un deuxième bras du modulateur,
- le premier bras du modulateur présentant un premier modulateur Mach-Zehnder (30, 30'),
- le deuxième bras du modulateur présentant un deuxième modulateur Mach-Zehnder (31, 31'),
- des moyens de déplacement de phase pour introduire un déplacement de phase supplémentaire $\Delta\varphi$ entre le premier bras et le deuxième bras, et
- des moyens de combinaison (42) pour combiner les signaux dans les deux bras du modulateur,

l'émetteur étant en outre configuré pour générer la première section d'en-tête modulée par tout ou rien, dans lequel lors de la génération de la première section d'en-tête

- le premier modulateur Mach-Zehnder (30) du premier modulateur à déplacement de phase en quadrature (40) est configuré pour délivrer en sortie un signal modulé par déplacement de phase binaire,
- le deuxième modulateur Mach-Zehnder (31) du premier modulateur à déplacement de phase en quadrature (40) est configuré pour délivrer en sortie un signal constant ayant quasiment la même amplitude que le signal modulé par déplacement de phase binaire,
- les moyens de déplacement de phase du premier modulateur à déplacement de phase en quadrature (40) sont réglés de sorte que le déplacement de phase supplémentaire $\Delta\varphi$ entre le premier et le deuxième bras corresponde à un nombre quelconque parmi 0, $n \cdot \Pi$ ou $-n \cdot \Pi$, n étant un entier naturel, et
- le deuxième modulateur à déplacement de phase en quadrature (40') ne délivre quasiment aucune lumière ou un faible niveau de lumière par rapport au premier modulateur à déplacement de phase en quadrature (40).

8.  Récepteur optique cohérent configuré pour recevoir des rafales optiques, une rafale optique comprenant une première section d'en-tête (1) et une section de charge utile (4), le récepteur optique comprenant des moyens pour recevoir

- la première section d'en-tête (1) qui est un signal à polarisation unique dans une première polarisation, et
- la section de charge utile (4) qui est un signal à double polarisation présentant un signal dans la première polarisation et un signal dans une deuxième polarisation,

le récepteur comprenant en outre :

- un démultiplexeur de polarisation (21),

le récepteur étant configuré pour calculer, afin de régler le démultiplexeur de polarisation (21), un ou plusieurs paramètres qui sont caractéristiques de l'état de polarisation du signal à polarisation unique reçu sur la base de la première section d'en-tête (1) reçue.

9.  Récepteur optique cohérent selon la revendication 8, dans lequel

- le démultiplexeur de polarisation (21) est mis en oeuvre par un filtre de démultiplexage de polarisation numérique, et
- le récepteur comprend des moyens de calcul de coefficients pour calculer des coefficients de filtre du filtre de démultiplexage de polarisation numérique (21), les moyens de calcul de coefficients étant configurés pour calculer, sur la base de la première section d'en-tête (1) reçue, un ou plusieurs coefficients de filtre de la partie de filtre associés à la récupération d'un signal dans la première polarisation.

10. Récepteur optique cohérent selon la revendication 9, dans lequel

- le filtre de démultiplexage de polarisation comprend quatre filtres à réponse impulsionnelle finie (h11, h21, h 12, h22) dans une structure en papillon, deux (h11, h12) parmi les quatre filtres à réponse impulsionnelle finie pour récupérer un signal dans la première polarisation et les deux autres (h21, h22) parmi les quatre filtres à réponse impulsionnelle finie pour récupérer un signal dans la deuxième polarisation, et

26

- les moyens de calcul de coefficients sont configurés pour calculer, sur la base de la première section d'entête reçue, les coefficients des filtres centraux des deux filtres à réponse impulsionnelle finie (h11, h12) qui sont destinés à récupérer un signal dans la première polarisation.

11. Récepteur optique cohérent selon la revendication 10, dans lequel les moyens de calcul de coefficients sont configurés pour exécuter un algorithme à module constant ou un algorithme assisté par des données, l'algorithme étant initialisé avec les coefficients calculés des filtres centraux.

12. Récepteur optique cohérent selon la revendication 10, dans lequel

- le coefficient $h_{11}$ d'un filtre central du filtre à réponse impulsionnelle finie ($h_{11}$) connectant une première entrée du filtre de démultiplexage de polarisation à une première sortie du filtre de démultiplexage de polarisation, la première sortie étant associée à la première polarisation, et
- le coefficient $h_{12}$ d'un filtre central du filtre à réponse impulsionnelle finie ($h_{12}$) connectant une deuxième entrée du filtre de démultiplexage de polarisation à la première sortie du filtre de démultiplexage de polarisation

sont déterminés conformément aux formules suivantes :
avec

$$h_{11} = \sqrt{\alpha} \cdot e^{-j\delta}$$

$$h_{12} = \sqrt{1-\alpha}$$

$$\text{with} \begin{cases} \alpha = \dfrac{|\bar{r}|}{|\bar{r}|-1} & , \quad \delta = \arg(\bar{r}) \quad , \quad \bar{r} = average\left(\dfrac{x_1(k)}{x_2(k)}\right) \quad or \\[4mm] \alpha = \dfrac{1}{|\bar{r}|+1} & , \quad \delta = -\arg(\bar{r}) \quad , \quad \bar{r} = average\left(\dfrac{x_2(k)}{x_1(k)}\right) \end{cases}$$

dans lesquelles

- $x_1(k)$ indique un échantillon à l'instant k au niveau de la première entrée du filtre de démultiplexage de polarisation ou en amont de celle-ci,
- $x_2(k)$ indique un échantillon à l'instant k au niveau de la deuxième entrée du filtre de démultiplexage de polarisation ou en amont de celle-ci, et
- average indique la moyenne sur une pluralité d'instants k.

13. Récepteur optique cohérent selon la revendication 8, dans lequel

- la rafale comprend une deuxième section d'en-tête (2) en plus de la première section d'en-tête (1), la deuxième section d'en-tête étant un signal à polarisation unique dans la deuxième polarisation, et
- le récepteur est configuré pour calculer un ou plusieurs paramètres caractéristiques de l'état de polarisation du signal à polarisation unique reçu de la deuxième section d'en-tête (2) sur la base de la deuxième section d'en-tête (2) reçue afin de régler le démultiplexeur de polarisation.

14. Récepteur optique cohérent selon la revendication 8, dans lequel

- le démultiplexeur de polarisation (21) est mis en oeuvre par un filtre de démultiplexage de polarisation, et

- le récepteur comprend des moyens de calcul de coefficients pour calculer des coefficients de filtre du filtre de démultiplexage de polarisation (21), les moyens de calcul de coefficients sont configurés pour calculer un ou plusieurs coefficients de filtre de la partie de filtre (h21, h22) associés à la récupération d'un signal dans la deuxième polarisation sur la base du ou des paramètres caractéristiques de l'état de polarisation du signal à polarisation unique reçu dans la première polarisation.

15. Récepteur optique cohérent selon la revendication 9, dans lequel la rafale comprend une séquence d'apprentissage (3) qui est un signal à double polarisation, dans lequel les moyens de calcul de coefficients sont configurés pour calculer des coefficients de filtre du filtre de démultiplexage de polarisation ou d'un filtre égaliseur sur la base de la séquence d'apprentissage (3) reçue.

16. Récepteur optique cohérent selon la revendication 8, dans lequel

   - une deuxième section d'en-tête (2) de la rafale, la deuxième section d'en-tête étant un signal à polarisation unique dans la première ou la deuxième polarisation, ou
   - la première section d'en-tête de la rafale ou une partie de la première section d'en-tête

est un signal optique constant, et
dans lequel

   - le récepteur comprend des moyens d'estimation de décalage de fréquence porteuse (22), les moyens d'estimation de décalage de fréquence porteuse (22) étant configurés pour exécuter une estimation de décalage de fréquence porteuse sur la base d'un signal électrique ($y_1$, $y_2$) dérivé du signal optique constant.

17. Récepteur cohérent selon la revendication 8, dans lequel le récepteur comprend un amplificateur optique (50) pouvant être commandé pour régler la puissance du signal d'oscillateur local.

18. Récepteur cohérent selon la revendication 17, dans lequel l'amplificateur optique (50) est commandé de telle sorte que l'amplitude du signal d'oscillateur local amplifié multipliée par l'amplitude du signal soit quasiment constante, dans lequel l'amplificateur optique (50) est commandé en fonction

   - d'un signal en aval d'une photodiode utilisée pour le suivi de la puissance des rafales optiques,
   - un signal (52) en aval d'une photodiode (55) séparée utilisée pour lire la première partie d'en-tête, ou
   - un signal (52) généré en combinant les signaux à partir d'une pluralité de convertisseurs analogique-numérique (15) dans le trajet de récepteur.

19. Récepteur cohérent selon la revendication 8, avec lequel le récepteur comprend en outre :

   - des moyens de compensation de dispersion chromatique (20) ; et
   - des moyens pour déterminer des paramètres des moyens de compensation de dispersion chromatique (20), les moyens pour déterminer des paramètres étant configurés pour déterminer les paramètres en utilisant des informations contenues dans la première section d'en-tête (1) ou dans une section d'en-tête différente qui indique l'émetteur et/ou le chemin de transmission optique.

20. Récepteur cohérent selon la revendication 8,

   - le démultiplexeur de polarisation (21) est mis en oeuvre par un filtre de démultiplexage de polarisation, et
   - le récepteur comprend des moyens de calcul de coefficients pour calculer des coefficients de filtre du filtre de démultiplexage de polarisation (21), dans lequel les moyens de calcul de coefficients sont configurés pour sélectionner un algorithme à partir d'une pluralité d'algorithmes, et
   - le récepteur comprend des moyens d'estimation de décalage de fréquence porteuse (22) qui peuvent être configurés en fonction d'un paramètre M, dans lequel les moyens d'estimation de décalage de fréquence porteuse sont configurés pour réaliser une opération à la puissance M.

Fig. 1

Fig. 2

Fig. 3

CFE header
2$^{nd}$ pol.

Learning sequence

OOK header
1$^{st}$ pol.

payload

| 1 | 2 | 3 | 4 |

t

Polarization
Estimation of 1$^{st}$ pol.

Accurate estimation of
Filter coefficients

Carrier Frequency Estimation
Polarization Estimation of 2$^{nd}$ pol.

**Fig. 4**

CD comp.

Pol. demux. / equalizer
~1000 symbols

CFE
~500 symbols

CPE
~10 symbols

$x'_1$  $x_1$  $h_{11}$  $y_1$ 22  23

20

$h_{12}$  $h_{21}$

Parameters determined
by OOK header

Parameters determined
by CFE header

$x'_2$  $x_2$  $y_2$  22  23

21  $h_{22}$

~128 to 512
complex coef.

~20 to 40 complex coef.

1 scalar

1 scalar

**Fig. 5**

Fig. 6

Fig. 7

**Fig. 8**

Fig. 9

Fig. 10

**51**
Local oscillator

**50**
SOA

**52**
SOA control

**53**
Coherent Mixer unit

signal **10**

ADCs

DSP

**15** **54** **16**

OOK header

Fig. 11

**55**

**54**
OOK header

**52**
SOA control **51**
Local oscillator

**50**
SOA

**10**
signal

Coherent Mixer unit

ADCs

DSP

**53** **15** **16**

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2071754 A
- EP 09290325 A

- EP 08290902 A

**Non-patent literature cited in the description**

- **SEB J. SAVORY.** Digital Filters for Coherent Optical Receivers. *Optics Express,* 21 January 2008, vol. 16 (2), 804-817
- Optical Packet and Burst Switching Technologies for the Future Photonic Internet. **BEN YOO S J.** Journal of Lightwave Technology. IEEE Sevice Center, 01 December 2006, vol. 24, 4468-4492

- **NELSON L E et al.** Tolerance of 46-Gb/s dual-polarization quadrature-phase shift keyed signals to multiple-path interference. *Optical Fiber Communication - Includes post deadline papers, 2009, OFC 2009, Conference,* 22 March 2009, 1-3
- **VICENTE ZARZOSO et al.** Semi-blind Constant modulus equalization with optimal step size. *ICASSP,* 2005